# EUROPÄISCHE PATENTSCHRIFT

(11) **EP 3 929 451 B1**
(45) Veröffentlichungstag und Bekanntmachung des Hinweises auf die Patenterteilung: **19.02.2025**
(21) Anmeldenummer: 21191917.0
(22) Anmeldetag: 05.11.2018
(51) Int. Cl.: F16B 47/00, A42B 3/00, B65D 43/02, B60R 11/02, F16B 1/00

(54) **SYSTEM MIT MOBILTELEFON UND VERBINDUNGSVORRICHTUNG**
ASSEMBLY WITH MOBILE PHONE AND CONNECTION DEVICE
ENSEMBLE DE TELEPHONE PORTABLE ET DE DISPOSITIF DE LIAISON

(30) Priorität: 06.11.2017 DE 102017125846
(43) Veröffentlichungstag der Anmeldung: 29.12.2021
(62) Teilanmeldung aus: 18804526.4
(73) Patentinhaber: Fidlock GmbH, 30659 Hannover (DE)
(72) Erfinder: BOTKUS, Breido, 30175 Hannover (DE); FIEDLER, Joachim, 30175 Hannover (DE); BLECKAT, Björn, 30167 Hannover (DE)
(74) Vertreter: Maikowski & Ninnemann Patentanwälte Partnerschaft mbB

(56) Entgegenhaltungen:
- EP-A1- 3 141 355
- US-B2- 8 925 881

## Beschreibung

Die Erfindung betrifft ein Mobiltelefon mit Verbindungsvorrichtung zum lösbaren Verbinden des Mobiltelefons mit einer weiteren Baugruppe.

Eine derartige Verbindungsvorrichtung weist ein Verschlussmodul auf, das an einer ersten der Baugruppen befestigbar ist und ein Unterdruckelement aufweist, das in eine Ansetzrichtung mit einer Ansetzkomponente zum Verbinden des Mobiltelefons mit der weiteren Baugruppe verbindbar ist und in einer verbundenen Stellung derart mit der Ansetzkomponente wechselwirkt, dass bei Belastung des Verschlussmoduls und der Ansetzkomponente entgegen der Ansetzrichtung relativ zueinander das Unterdruckelement und die Ansetzkomponente aufgrund einer Unterdruckwirkung zwischen dem Unterdruckelement und der Ansetzkomponente aneinander gehalten sind.

Eine Verbindungsvorrichtung soll vorliegend zum Befestigen eines Mobiltelefons an einer zugeordneten Baugruppe dienen. So kann die Verbindungsvorrichtung beispielsweise die Befestigung des Mobiltelefons in einem Fahrzeug, z.B. an der Windschutzscheibe oder am Armaturenbrett eines Fahrzeugs, ermöglichen.

Wird ein Mobiltelefon an einem Armaturenbrett eines Fahrzeugs oder am Lenker eines Fahrrads befestigt, so können bei Gebrauch impulsartige Stoßkräfte wirken, die aufgefangen und abgeleitet werden müssen und insbesondere nicht zu einem Lösen des Mobiltelefons führen sollen. Eine Verbindungsvorrichtung zum Befestigen eines Mobiltelefons soll daher insbesondere in der Lage sein, kurzzeitig wirkende, impulsartige Stoßkräfte aufzunehmen.

Zum Befestigen ganz unterschiedlicher Baugruppen aneinander, beispielsweise auch zum Befestigen eines elektronischen Geräts in Form eines Mobiltelefons oder Navigationsgeräts in einem Fahrzeug, sind Verbindungsvorrichtungen bekannt, die eine Halterung mittels Unterdruck bereitstellen. So ist aus der US 8,925,881 eine Verbindungsvorrichtung bekannt, die ein Unterdruckelement in Form eines Saugnapfes verwendet, um ein Mobiltelefon an der Windschutzscheibe eines Fahrzeugs festzulegen. Der Saugnapf wird hierzu an die Windschutzscheibe angesetzt, wobei an dem Saugnapf ein Magnetelement angeordnet ist, das mit einem magnetisch wirkenden Element auf Seiten der Windschutzscheibe zusammenwirken kann, um den Halt an der Windschutzscheibe zu verbessern.

Bei einer aus der US 5,192,043 bekannten Verbindungsvorrichtung zum Befestigen einer Alarmvorrichtung an einer Metallfläche wird eine magnetische Gummifläche an eine Metallfläche angesetzt, wobei bei Ansetzen ein Vakuum entsteht, sodass durch Magnetwirkung zwischen der Gummifläche und der Metallfläche sowie durch Unterdruckkräfte die Alarmvorrichtung an der Metallfläche gehalten wird.

Eine aus der EP 0 689 966 B1 bekannte Verbindungsvorrichtung weist eine magnetische Kontaktplatte auf, an der ein Saugnapf angeordnet ist. Mittels der Verbindungsvorrichtung kann ein Skiträger an einem Fahrzeugdach eines Fahrzeugs befestigt werden.

Solche Verbindungsvorrichtungen sollen zum einen einfach schließbar sein, um eine Verbindung zwischen den zugeordneten Baugruppen herzustellen. Zudem ist aber auch wünschenswert, dass solche Verbindungsvorrichtungen auch einfach zu öffnen sind, um insbesondere ein ruckartiges Abreißen unter Überwindung eines Unterdrucks und gegebenenfalls zusätzlich einer magnetischen Verbindung zu vermeiden.

Die EP 3 141 355 A1 beschreibt einen elektrischen Steckverbinder, der einen steuerbaren Elektromagneten aufweist.

Aufgabe der vorliegenden Erfindung ist es, ein Mobiltelefon mit einer Verbindungsvorrichtung zur Verfügung zu stellen, die einfach verwendbar, insbesondere einfach zu schließen, aber auch einfach wieder zu öffnen ist, bei vorteilhafter Verbindung des Mobiltelefons mit einer zugeordneten Baugruppe auch bei einer Stoßbelastung.

Die Aufgabe wird durch ein System nach dem unabhängigen Anspruch 1 gelöst.

Eine Verbindungsvorrichtung umfasst beispielsweise ein Verstellelement, das an dem Verschlussmodul angeordnet ist und relativ zu dem Unterdruckelement verstellbar ist. Das Verstellelement ermöglicht ein Lösen des Unterdruckelements von der Ansetzkomponente, indem die dem Verschlussmodul zugeordnete erste Baugruppe derart mit dem Verstellelement wirkverbunden werden kann, dass eine Bewegung der ersten Baugruppe relativ zu der zweiten Baugruppe zu einem Bewegen des Verstellelements führt.

Bei der Verbindungsvorrichtung wird eine Verbindung zwischen den aneinander zu befestigenden Baugruppen dadurch hergestellt, dass das mit einer ersten der Baugruppen verbundene Verschlussmodul an eine Ansetzkomponente der anderen, zweiten der Baugruppen (oder umgekehrt die Ansetzkomponente an das Verschlussmodul) angesetzt wird. Beim Ansetzen entsteht ein abgedichteter Raum zwischen dem Unterdruckelement und der Ansetzkomponente, sodass die Baugruppen aufgrund einer Unterdruckwirkung aneinander gehalten sind. Solch eine Verbindung kann insbesondere belastbar auf Stoß sein, sodass über die Verbindungsvorrichtung Stoßkräfte aufgefangen und abgeleitet werden können.

Mittels der Verbindungsvorrichtung kann ein Mobiltelefon in einem Fahrzeug, zum Beispiel an einer Windschutzscheibe oder an einem Armaturenbrett, befestigt werden.

In der verbundenen Stellung der Verbindungsvorrichtung können das Unterdruckelement und die Ansetzkomponente zum Beispiel flächig aneinander anliegen, sodass effektiv kein Raum zwischen dem Unterdruckelement und der Ansetzkomponente besteht. Bei einer Belastung der Baugruppen relativ zueinander kann jedoch eine Kraft auf das Verschlussmodul relativ zu der Ansetzkomponente wirken, die in Richtung einer Vergrößerung oder Schaffung eines zwischen dem Unterdruckelement und der Ansetzkomponente gebildeten Raums wirkt, was einen Unterdruck zwischen dem Unterdruckelement und der Ansetzkomponente bewirkt und somit Haltekräfte erzeugt, die das Unterdruckelement an der Ansetzkomponente halten und tendenziell größer werden, je stärker das Verschlussmodul gegenüber der Ansetzkomponente belastet wird. Das Verschlussmodul wird somit aufgrund Unterdruckwirkung an der Ansetzkomponente gehalten, wenn das Verschlussmodul an die Ansetzkomponente angesetzt ist.

Das Verschlussmodul kann hierbei eine Strömungsöffnung aufweisen, die durch Bewegen des Verstellelements relativ zum Unterdruckelement für einen Zustrom von Luft in einen zwischen dem Unterdruckelement und der Ansetzkomponente vorhandenen Raum frei gegeben werden kann. Das Verstellelement kann beispielsweise in der verbundenen Stellung der Verbindungsvorrichtung eine erste Stellung relativ zu dem Unterdruckelement einnehmen, in der die Strömungsöffnung (betrachtet aus Richtung eines Raums zwischen dem Unterdruckelement und der Ansetzkomponente) verschlossen ist, sodass ein Zustrom von Luft in den Raum unterbunden ist. Aus dieser ersten Stellung kann das Verstellelement in eine zweite Stellung bewegt werden, um die Strömungsöffnung freizugeben und einen Zustrom von Luft in einen zwischen dem Unterdruckelement und der Ansetzkomponente gebildeten Raum zu ermöglichen. Eine Unterdruckwirkung zwischen dem Unterdruckelement und der Ansetzkomponente besteht somit, aufgrund des Zustroms durch die Strömungsöffnung, nicht mehr, sodass das Verschlussmodul ohne Unterdruckwirkung von der Ansetzkomponente abgenommen werden kann.

In einer vorteilhaften Ausgestaltung ist das Verstellelement in Richtung seiner ersten Stellung federvorgespannt. Das Verstellelement nimmt somit selbsttätig, wenn es nicht anderweitig betätigt ist, seine erste Stellung ein und verschließt somit, insbesondere in der verbundenen Stellung der Verbindungsvorrichtung, die Strömungsöffnung, sodass eine Unterdruckwirkung zwischen dem Unterdruckelement und der Ansetzkomponente entstehen kann.

Das Verschlussmodul weist hierzu vorzugsweise ein elastisches Vorspannelement auf, das zum Vorspannen des Verstellelements in Richtung der ersten Stellung dient. Bei Verstellen wird das Verstellelement entgegen der vorspannenden Wirkung des Vorspannelements bewegt, sodass nach Beendigung der Betätigung das Verstellelement selbsttätig in seine erste Stellung zurückgestellt wird.

Das Unterdruckelement an dem Verschlussmodul und die Ansetzkomponente an der anderen, zweiten Baugruppe können ganz unterschiedlich ausgestaltet sein und in ganz unterschiedlicher Weise zusammenwirken.

In einer ersten Ausgestaltung kann das Unterdruckelement beispielsweise zylindrisch geformt sein und in eine als Zylinderaufnahme ausgebildete Ansetzkomponente einzusetzen sein. Das Unterdruckelement und die Ansetzkomponente können hierbei als starre, nicht elastische Bauteile ausgebildet sein und sind in ihrer Formgebung so aufeinander abgestimmt, dass das Unterdruckelement zum Beispiel passgenau in eine Öffnung der Ansetzkomponente eingeführt werden kann. Entweicht bei Ansetzen des Unterdruckelements an die Ansetzkomponente Luft aus einem zwischen dem Unterdruckelement und der Ansetzkomponente gebildeten Raum, beispielsweise durch ein hierzu vorgesehenes Ventil, so entsteht zwischen dem Unterdruckelement und der Ansetzkomponente ein Vakuum und damit, wenn das Unterdruckelement in Richtung eines Lösens von der Ansetzkomponente belastet wird, ein Unterdruck, sodass hierdurch das Unterdruckelement an der Ansetzkomponente gehalten ist.

Das Unterdruckelement sowie die für das Unterdruckelement vorgesehene Öffnung der Ansetzkomponente können in diesem Fall einen kreisförmigen Querschnitt aufweisen.

Denkbar und möglich sind grundsätzlich aber beliebige Querschnittsformen, beispielsweise auch ein mehreckiger Querschnitt, zum Beispiel ein Vieleck, oder auch eine völlig beliebige andere Form. Insofern ist der Begriff des Zylinders in diesem Zusammenhang als allgemeiner Zylinder mit beliebiger Querschnittsform zu verstehen.

Bei der gerade beschriebenen Variante können das Unterdruckelement und die Ansetzkomponente jeweils als starre Bauteile ausgebildet sein, die ineinander einzusetzen sind. Denkbar und möglich ist hierbei aber auch, an einem oder an beiden Bauteilen eine oder mehrere elastische Dichtungen zur Abdichtung der Bauteile gegeneinander vorzusehen.

In dieser ersten Ausgestaltung kann durch Verstellen des Verstellelements beispielsweise eine Strömungsöffnung in Form eines Ventils freigegeben werden, sodass auf diese Weise der Unterdruck zwischen dem Unterdruckelement und der Ansetzkomponente aufgehoben werden kann.

In einer anderen, zweiten Ausgestaltung ist das Unterdruckelement durch ein zumindest abschnittsweise elastisches Napfelement und die Ansetzkomponente durch eine an der zweiten Baugruppe gebildete Ansetzfläche, mit der das Unterdruckelement zum Verbinden der Baugruppen zum Bereitstellen einer Unterdruckwirkung in Anlage bringbar ist, ausgebildet. In diesem Fall verwirklicht das Unterdruckelement somit ein Bauteil nach Art eines elastischen Saugnapfes, das an einer Fläche der zugeordneten, zweiten Baugruppe angeordnet werden kann, um unter elastischer Verformung ein Vakuum zwischen dem Unterdruckelement und der Fläche zu bilden und dadurch Haltekräfte zum Halten der Baugruppen aneinander bereitzustellen.

In diesem Fall kann das Verstellelement zum Beispiel zum Öffnen einer Strömungsöffnung in Form eines Ventils bewegt werden, um auf diese Weise eine Luftströmung in einen Raum zwischen dem Unterdruckelement und der Ansetzkomponente zu ermöglichen. Alternativ ist aber auch denkbar und möglich, dass durch Bewegen des Verstellelements das Unterdruckelement in Form des Napfelements von der Fläche abgehoben, beispielsweise in senkrechter Richtung zur Fläche abgezogen wird, wobei zum Beispiel kraftumlenkende Elemente eine Trennkraft zwischen dem Verschlussmodul und der Ansetzkomponente bewirken können.

Das Verstellelement ist, in einer Ausgestaltung, an dem Unterdruckelement oder an einem mit dem Unterdruckelement fest verbundenen Element geführt. Die Bewegung des Verstellelements relativ zu dem Unterdruckelement kann hierbei entlang einer geradlinigen oder auch gekrümmten, zum Beispiel kreisbogenförmig gebogenen Führungsbahn erfolgen. Durch die geführte Bewegung kann zum Beispiel eine Strömungsöffnung freigegeben werden, um auf diese Weise einen Luftstrom zwischen das Unterdruckelement und die Ansetzkomponente zuzulassen und somit eine Unterdruckwirkung zwischen dem Unterdruckelement und der Ansetzkomponente zu eliminieren.

Grundsätzlich kann das Verstellelement gegenüber dem Unterdruckelement verdrehbar, verschiebbar und/oder verkippbar sein. Beispielsweise kann das Verstellelement als Klappenelemente oder als Hebelelement verschwenkbar an dem Unterdruckelement oder an einem mit dem Unterdruckelement verbundenen Bauteil gelagert sein und kann relativ zu dem Unterdruckelement verschwenkt werden, um eine Strömungsöffnung freizugeben und somit eine Unterdruckwirkung zwischen dem Unterdruckelement und der Ansetzkomponente zu eliminieren.

Die erste Baugruppe ist unmittelbar oder mittelbar mit dem Verstellelement verbunden, sodass eine Bewegung an der ersten Baugruppe auch zu einer Bewegung des Verstellelements insbesondere zum Lösen des Verschlussmoduls von der Ansetzkomponente führt. Ist die erste Baugruppe unmittelbar an dem Verstellelement angeordnet, so ist die erste Baugruppe fest mit dem Verstellelement verbunden, beispielsweise durch eine Schraubverbindung. Ist die erste Baugruppe mittelbar mit dem Verstellelement verbunden, so kann die erste Baugruppe beispielsweise an einem Betätigungselement angeordnet sein, das derart mit dem Verstellelement wirkverbunden ist, dass bei einer Betätigung des Betätigungselements auch das Verstellelement bewegt wird. Das Betätigungselement kann beispielsweise als Hebel ausgebildet sein, der bei einem Verschwenken auf das Verstellelement einwirkt und dieses bewegt, sodass beispielsweise eine Strömungsöffnung zum Aufheben einer Unterdruckwirkung zwischen dem Unterdruckelement und der Ansetzkomponente freigegeben wird.

In einer konkreten Ausgestaltung weist das Verschlussmodul ein Zylinderteil auf, das fest mit dem Unterdruckelement verbunden ist und das Verstellelement führt. Beispielsweise kann das Verstellelement mit einem Kopfabschnitt (mit einem kreisförmigen Querschnitt) in einem zylindrischen Hohlraum (mit einem kreisförmigen Querschnitt) des Zylinderteils einliegen und gleitend entlang einer den zylindrischen Hohlraum umgebenden Innenfläche des Zylinderteils verstellbar sein. Das Verstellelement wirkt somit nach Art eines Kolben in dem zylindrischen Hohlraum des Zylinderteils, sodass durch Verstellen des Verstellelements in dem zylindrischen Hohlraum des Zylinderteils das Volumen des Raums zwischen dem Unterdruckelement und der Ansetzkomponente vergrößert werden kann. Bei Verstellen wird das Verstellelement somit innerhalb des Zylinderteils bewegt und gleitet dadurch innerhalb des Hohlraums des Zylinderteils.

In einer Ausgestaltung ist das Verstellelement an einer entlang einem Abschnitt einer Helix erstreckten Führungsbahn gegenüber dem Zylinderteil geführt. Die Führungsbahn kann beispielsweise an einem Führungsteil ausgebildet sein, das eine umfänglich um das Zylinderteil erstreckte Mantelfläche aufweist und somit radial außerhalb des Zylinderteils angeordnet ist. Die Führungsbahn kann nach Art einer Kulisse in die Mantelfläche eingeformt sein, wobei in der Führungsbahn beispielsweise ein Führungselement eines mit dem Verstellelement verbundenen Gehäuseteils geführt ist.

Denkbar und möglich ist in diesem Zusammenhang, eine einzelne Führungsbahn vorzusehen, entlang derer das Verstellelement geführt ist. Denkbar und möglich ist aber auch, mehrere umfänglich zueinander versetzte Führungsbahnen bereitzustellen, in die jeweils ein Führungselement eines mit dem Verstellelement verbundenen Gehäuseteils eingreift, sodass eine leichtgängige, definierte Führung des Verstellelements relativ zu dem Zylinderteil bereitgestellt wird, bei der ein Verkanten zwischen dem Verstellelement und dem Zylinderteil ausgeschlossen ist.

Die Führungsbahn erstreckt sich entlang eines Abschnitts einer Helix. Durch die Führung über die Führungsbahn kann das Verstellelement bei Verstellen somit graduell axial bewegt werden, entlang einer durch die Helix bereitgestellten Schraubenlinie. Eine Verdrehbewegung des Verstellelements wird somit in eine axiale Bewegung entlang der Zylinderachse des Zylinderteils übersetzt, sodass das Verstellelement leichtgängig durch schraubendes Verdrehen verstellbar sein kann.

Über den in dem Hohlraum des Zylinderteils einliegenden Kopfabschnitt kann das Verstellelement vorzugsweise fluiddicht gegenüber der Innenfläche des Zylinderteils abgedichtet sein. Der Kopfabschnitt liegt hierzu z.B. so passgenau in dem Hohlraum des Zylinderteils ein, dass Luft nicht an dem Kopfabschnitt vorbeiströmen kann. An dem Kopfabschnitt vorbei kann somit keine Luft in den zwischen dem Unterdruckelement und der Ansetzkomponente gebildeten Raum einströmen, sodass - ohne Verstellen des Verstellelements - der Unterdruck in dem Raum für ein zuverlässiges Halten der Baugruppen aneinander aufrechterhalten wird.

Der Kopfabschnitt kann passgenau in dem Hohlraum des Zylinderteils einliegen. Denkbar und möglich ist aber auch, zum Beispiel an dem Kopfabschnitt eine umlaufende Dichtung zum Abdichten des Übergangs zwischen dem Kopfabschnitt und der Innenfläche des Zylinderteils vorzusehen.

In einer Ausgestaltung ist die Strömungsöffnung an dem Zylinderteil gebildet. Die Strömungsöffnung wird bei Verstellen des Verstellelements aus der ersten Stellung heraus freigegeben, sodass ein Luftstrom zwischen das Unterdruckelement und die Ansetzkomponente strömen kann und eine Unterdruckwirkung zwischen dem Unterdruckelement und der Ansetzkomponente somit aufgehoben wird. Die Strömungsöffnung erfüllt die Funktion eines Ventils, das bei an die Ansetzkomponente angesetztem Unterdruckelement geschlossen ist, sodass eine Unterdruckwirkung zwischen dem Unterdruckelement und der Ansetzkomponente besteht. Zum Öffnen der Verbindungsvorrichtung kann die Strömungsöffnung durch Verstellen des Verstellelements geöffnet werden, sodass eine Luftströmung von außen zwischen das Unterdruckelement und die Ansetzkomponente strömen kann. Dadurch werden die Haltekräfte der Verbindungsvorrichtung aufgehoben, sodass die über die Verbindungsvorrichtung miteinander verbundenen Baugruppen in einfacher Weise voneinander gelöst werden können.

Die Strömungsöffnung kann an der Zylinderwandung des Zylinderteils an einer axial zurückgesetzten Position gebildet sein, also an einer Position, die derart angeordnet ist, dass bei an die Ansetzkomponente angesetztem Unterdruckelement der Kopfabschnitt des Verstellelements zwischen der Strömungsöffnung und der Ansetzkomponente zu liegen kommt und somit einen Strömungsweg zwischen der Strömungsöffnung und einem Raum zwischen der Ansetzkomponente und dem Unterdruckelement schließt. Bei Verstellen gleitet das Verstellelement innerhalb des Hohlraums des Zylinderteils und überstreicht die Strömungsöffnung, sodass ein Strömungsweg zwischen das Unterdruckelement und die Ansetzkomponente freigegeben wird und somit Luft einströmen kann.

Das Verschlussmodul weist, in einer Ausgestaltung, ein elastisches Vorspannelement auf, das zum Vorspannen des Verstellelements in Richtung der ersten Stellung dient. Das Verstellelement wird somit federelastisch in der ersten Stellung gehalten, beispielsweise mittels einer Druckfeder, die zwischen dem Verstellelement und dem Zylinderteil wirkt. Bei Verstellen wird das Verstellelement entgegen der vorspannenden Wirkung des Vorspannelements bewegt, sodass nach Beendigung der Betätigung das Verstellelement selbsttätig in seine erste Stellung zurückgestellt wird.

In einer Ausgestaltung kann an der Ansetzkomponente der zweiten Baugruppe, beispielsweise in Form einer planen Ansetzfläche, eine Ansetzbaugruppe zu befestigen sein, die ein Ansetzteil aufweist, mit dem das Verschlussmodul zum Verbinden der Baugruppen in Wechselwirkung gebracht werden kann. Die Ansetzbaugruppe kann den Halt der Verbindungsvorrichtung verbessern und insbesondere eine definierte Lage zwischen dem Verschlussmodul und der Ansetzkomponente bewirken, insbesondere auch zur Abstützung von zwischen dem Verschlussmodul und der Ansetzkomponente wirkenden Querkräften.

Beispielsweise kann das Verstellelement einen ersten Formschlussabschnitt und das Ansetzteil einen zweiten Formschlussabschnitt aufweisen. Bei Ansetzen des Verschlussmoduls und des Ansetzteils aneinander gelangen die Formschlussabschnitte formschlüssig miteinander in Eingriff derart, dass eine Querbewegung zwischen dem Verschlussmodul und der Ansetzkomponente gesperrt ist. Mittels der Formschlussabschnitte kann somit insbesondere eine Bewegung quer zu einer Ansetzrichtung, entlang derer das Verschlussmodul und die Ansetzkomponente aneinander ansetzbar sind, gesperrt werden, sodass in Querrichtung wirkende Kräfte (also in der Ebene der Ansetzfläche wirkende Kräfte) aufgenommen und abgestützt werden können.

Zusätzlich oder alternativ kann über diese Ansetzbaugruppe das Verschlussmodul auch in seiner Drehstellung gesichert sein, sodass auch Torsionskräfte aufgenommen und abgestützt werden können. Hierzu kann das Unterdruckelement oder ein mit dem Unterdruckelement verbundenes Element, zum Beispiel das Zylinderteil, einen ersten Eingriffsabschnitt aufweisen, während das Ansetzteil (an der anderen, zweiten Baugruppe) einen zweiten Eingriffsabschnitt aufweist. Bei Ansetzen des Verschlussmoduls und des Ansetzteils aneinander gelangen die Eingriffsabschnitte sperrend miteinander in Eingriff und sperren auf diese Weise eine Verdrehbewegung des Unterdruckelements gegenüber dem Ansetzteil.

Die Eingriffsabschnitte können beispielsweise durch eine (vorzugsweise an einem kreisförmigen Randabschnitt umlaufende) Verzahnung an dem Unterdruckelement oder dem mit dem Unterdruckelement verbundenen Element einerseits und dem Ansetzteil andererseits gebildet sein.

In einer Ausführungsform weist das Verschlussmodul ein erstes Magnetelement zum magnetischen Unterstützen des Herstellens der Verbindung der Baugruppen miteinander auf. Dieses erste Magnetelement kann beispielsweise an dem Verstellelement angeordnet sein und wird somit mit dem Verstellelement zusammen bewegt. Alternativ oder zusätzlich kann ein Magnetelement auch an dem Unterdruckelement oder einem mit dem Unterdruckelement verbundenen Element, beispielsweise dem Zylinderteil, vorgesehen sein.

Ein zweites Magnetelement kann demgegenüber an der Ansetzkomponente befestigt werden. Ein solches zweites Magnetelement kann beispielsweise an dem Ansetzteil angeordnet sein und zusammen mit dem Ansetzteil an der Ansetzkomponente angeordnet werden. Die Magnetelemente des Verschlussmoduls einerseits und der Ansetzkomponente andererseits dienen dazu, beim Ansetzen des Verschlussmoduls und der Ansetzkomponente aneinander eine magnetische Anziehungskraft bereitzustellen, sodass die Herstellung des Unterdrucks in magnetisch unterstützter Weise (vorzugsweise selbsttätig) erfolgt. Bei Ansetzen werden das Verschlussmodul und die Ansetzkomponente aufgrund der magnetischen Wechselwirkung magnetisch anziehend zueinander hingezogen, sodass ein (Beinahe-)Vakuum zwischen dem Unterdruckelement und der Ansetzkomponente bewirkt wird, beispielsweise indem das als elastisches Napfelement ausgebildete Unterdruckelement gegen die als Ansetzfläche ausgebildete Ansetzkomponente gepresst wird.

Ist das erste Magnetelement an dem Verstellelement angeordnet, so wird das erste Magnetelement bei Verstellen des Verstellelements zusammen mit dem Verstellelement bewegt und kann dadurch von dem zweiten Magnetelement auf Seiten der Ansetzkomponente entfernt werden, sodass sich die magnetischen Anziehungskräfte abschwächen. Durch Verstellen des Verstellelements werden somit auch die magnetischen Haltekräften zumindest abgeschwächt, was zu einem einfachen, leichtgängigen, haptisch angenehmen Öffnen beitragen kann.

Das erste Magnetelement und das zweite Magnetelement können jeweils durch einen Permanentmagneten oder auch eine Anordnung von mehreren Permanentmagneten gebildet sein und wirken zum Schließen der Verbindungsvorrichtung magnetisch anziehend zusammen, indem sie mit ungleichnamigen Magnetpolen aufeinander zu weisen. Denkbar ist aber auch, dass ein Magnetelement durch einen Permanentmagneten oder eine Anordnung von mehreren Permanentmagneten gebildet ist, während das andere Magnetelement durch einen magnetischen Anker aus einem ferromagnetischen Material gebildet ist.

In einer Ausgestaltung weist das Verschlussmodul ein oder mehrere elektrische Kontaktelemente auf, die zum elektrischen Kontaktieren mit einem oder mehreren der Ansetzkomponente zugeordneten Gegenkontaktelementen dienen, wenn das Verschlussmodul bei geschlossener Verbindungsvorrichtung an die Ansetzkomponente angesetzt ist. Über die Verbindungsvorrichtung kann somit auch eine elektrische Verbindung hergestellt werden - über eine mechanische Verbindung zum Halten von Baugruppen aneinander hinaus. Über ein oder mehrere elektrische Kontaktelemente können beispielsweise Ströme für eine elektrische Versorgung zum Beispiel zum Aufladen des Mobiltelefons übertragen werden, oder es kann eine Datenverbindung zum Austausch von Datensignalen bereitgestellt werden.

Die erfindungsgemäße Verbindungsvorrichtung dient beispielsweise dazu, ein Mobiltelefon in einem Fahrzeug zu befestigen, beispielsweise an einer Windschutzscheibe oder an einem Armaturenbrett.

Die Aufgabe wird durch ein System mit einem Mobiltelefon und einer Verbindungsvorrichtung zum lösbaren Verbinden des Mobiltelefons mit einer weiteren Baugruppe gelöst, wobei die Verbindungsvorrichtung ein Verschlussmodul mit einem Unterdruckelement aufweist, das in eine Ansetzrichtung mit einer Ansetzkomponente zum Verbinden des Mobiltelefons mit der weiteren Baugruppe verbindbar ist und in einer verbundenen Stellung derart mit der Ansetzkomponente wechselwirkt, dass bei Belastung des Verschlussmoduls und der Ansetzkomponente entgegen der Ansetzrichtung relativ zueinander das Unterdruckelement und die Ansetzkomponente aufgrund einer Unterdruckwirkung zwischen dem Unterdruckelement und der Ansetzkomponente aneinander gehalten sind. Das Verschlussmodul weist ein erstes Magnetelement zum magnetischen Unterstützen der Verbindung des Mobiltelefons mit der weiteren Baugruppe auf. Das Unterdruckelement ist durch ein zumindest abschnittsweise elastisches Napfelement ausgebildet. Die Ansetzkomponente ist durch eine als Ansetzfläche dienende Gehäusefläche des Mobiltelefons ausgebildet. Eine Ansetzbaugruppe mit einem Ansetzteil und einem in einer Aufnahmeöffnung des Ansetzteils aufgenommenen zweiten Magnetelement ist an der Ansetzfläche angeordnet, um magnetisch mit dem ersten Magnetelement des Verschlussmoduls zusammen zu wirken.

In einer vorteilhaften Ausgestaltung ist das erste Magnetelement an dem Unterdruckelement oder an einem mit dem Unterdruckelement verbundenen Bauteil des Verschlussmoduls angeordnet. Ein zweites Magnetelement ist an der Ansetzkomponente befestigt und wechselwirkt derart mit dem ersten Magnetelement, dass ein Ansetzen des Verschlussmoduls an die Ansetzkomponente durch magnetische Anziehung unterstützt wird.

Das Mobiltelefon weist somit eine Verbindungsvorrichtung auf, die ein einfaches, jedoch belastbares Verbinden des Mobiltelefons mit einer weiteren Baugruppe (zum Beispiel einem Helm, insbesondere einem Sporthelm wie zum Beispiel einem Skihelm, oder einem Fahrzeug, zum Beispiel einem Fahrrad oder einem Kraftfahrzeug, zum Beispiel einem Armaturenbrett in einem Fahrzeuginnenraum eines Kraftfahrzeugs) ermöglicht. Das Verbinden des Mobiltelefons mit der weiteren Baugruppe erfolgt hierbei über die Verbindungsvorrichtung, deren Verschlussmodul zum einen durch Unterdruckwirkung und zum anderen durch magnetische Wechselwirkung mit der Ansetzkomponente wechselwirkt und somit in verbundener Stellung an der Ansetzkomponente gehalten ist.

Aufgrund der Unterdruckwirkung können insbesondere Stoßbelastungen vorteilhaft aufgefangen und abgeleitet werden und führen nicht zu einem Lösen des Mobiltelefons von der weiteren Baugruppe. Durch die magnetische Wechselwirkung kann die Verbindungsvorrichtung insbesondere einfach geschlossen werden, unter selbsttätiger Herstellung einer Unterdruckwirkung zwischen dem Unterdruckelement und der Ansetzkomponente.

Das Unterdruckelement weist vorzugsweise ein zumindest abschnittsweise elastisch ausgebildetes Napfelement auf oder ist durch ein solches Napfelement gebildet. Das Unterdruckelement kann somit beim Ansetzen des Verschlussmoduls an die Ansetzkomponente elastisch verformt werden, was eine Unterdruckwirkung zwischen dem Unterdruckelement und der Ansetzkomponente für einen festen Halt begünstigt.

In einer Ausgestaltung weist das Verschlussmodul ein oder mehrere elektrische Kontaktelemente auf, die zum elektrischen Kontaktieren mit einem oder mehreren der Ansetzkomponente zugeordneten Gegenkontaktelementen dienen, wenn das Verschlussmodul bei geschlossener Verbindungsvorrichtung an die Ansetzkomponente angesetzt ist. Über die Verbindungsvorrichtung kann somit auch eine elektrische Verbindung hergestellt werden - über eine mechanische Verbindung zum Halten des Mobiltelefons an einer zugeordneten Baugruppen hinaus. So können über ein oder mehrere elektrische Kontaktelemente beispielsweise Ströme für eine elektrische Versorgung zum Beispiel zum Aufladen des Mobiltelefons übertragen werden, oder es kann eine Datenverbindung zum Austausch von Datensignalen bereitgestellt werden.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Verbindungsvorrichtung zum Verbinden einer Kamera mit einem Helm;
- Fig. 1B: die Explosionsansichten gemäß Fig. 1A, aus anderer Perspektive;
- Fig. 2A: eine Ansicht der Verbindungsvorrichtung, bei Ansetzen eines Verschlussmoduls an eine Ansetzkomponente in Form einer Ansetzfläche auf Seiten des Helms;
- Fig. 2B: eine Seitenansicht der Anordnung;
- Fig. 2C: eine Schnittansicht entlang der Linie A-A gemäß Fig. 2B;
- Fig. 3A: eine Ansicht der Verbindungsvorrichtung, bei an die Ansetzkomponente angesetztem Verschlussmodul;
- Fig. 3B: eine Seitenansicht der Anordnung;
- Fig. 3C: eine Schnittansicht entlang der Linie A-A gemäß Fig. 3B;
- Fig. 4A: eine Ansicht der Verbindungsvorrichtung beim Öffnen;
- Fig. 4B: eine Seitenansicht der Anordnung;
- Fig. 4C: eine Schnittansicht entlang der Linie A-A gemäß Fig. 4B;
- Fig. 5A: eine Ansicht der Verbindungsvorrichtung beim weiteren Öffnen;
- Fig. 5B: eine Seitenansicht der Anordnung;
- Fig. 5C: eine Schnittansicht entlang der Linie A-A gemäß Fig. 5B;
- Fig. 6A: eine Ansicht der Anordnung bei geöffneter Verbindungsvorrichtung;
- Fig. 6B: eine Seitenansicht der Anordnung;
- Fig. 6C: eine Schnittansicht entlang der Linie A-A gemäß Fig. 6B;
- Fig. 7A: eine Ansicht der Verbindungsvorrichtung, bei Verwendung zum Befestigen eines Mobiltelefons in einem erfindungsgemäßen System;
- Fig. 7B: eine Seitenansicht der Anordnung gemäß Fig. 7A;
- Fig. 7C: eine Schnittansicht entlang der Linie B-B gemäß Fig. 7B;
- Fig. 8A: eine Explosionsansicht eines weiteren Ausführungsbeispiels einer Verbindungsvorrichtung zum Verbinden zweier Baugruppen miteinander, zum Beispiel eines elektronischen Geräts in Form eines Mobiltelefons an einer anderen Baugruppe, zum Beispiel an einem Armaturenbrett eines Fahrzeugs;
- Fig. 8B: eine andere Explosionsansicht der Verbindungsvorrichtung;
- Fig. 9A: eine Ansicht der Verbindungsvorrichtung, bei an eine Ansetzkomponente angesetztem Verschlussmodul;
- Fig. 9B: eine Seitenansicht der Anordnung gemäß Fig. 9A;
- Fig. 9C: eine Schnittansicht entlang der Linie A-A gemäß Fig. 9B;
- Fig. 10A: eine Ansicht der Verbindungsvorrichtung beim Öffnen zum Lösen des Verschlussmoduls von der Ansetzkomponente;
- Fig. 10B: eine Seitenansicht der Anordnung gemäß Fig. 10A;
- Fig. 10C: eine Schnittansicht entlang der Linie C-C gemäß Fig. 10B;
- Fig. 11A: eine Explosionsansicht eines weiteren Ausführungsbeispiels einer Verbindungsvorrichtung;
- Fig. 11B: eine andere Explosionsansicht der Verbindungsvorrichtung;
- Fig. 12A: eine Ansicht der Verschlussvorrichtung, bei an eine Ansetzkomponente angesetztem Verschlussmodul;
- Fig. 12B: eine Seitenansicht der Anordnung gemäß Fig. 12A;
- Fig. 12C: eine Schnittansicht entlang der Linie A-A gemäß Fig. 12B;
- Fig. 13A: eine Ansicht der Verbindungsvorrichtung beim Öffnen zum Lösen des Verschlussmoduls von der Ansetzkomponente;
- Fig. 13B: eine Seitenansicht der Anordnung gemäß Fig. 13A;
- Fig. 13C: eine Schnittansicht entlang der Linie B-B gemäß Fig. 13B;
- Fig. 14: eine schematische Ansicht eines anderen Ausführungsbeispiels einer Verbindungsvorrichtung;
- Fig. 15A: eine Explosionsansicht eines Ausführungsbeispiels einer Verbindungsvorrichtung an einem Behälterkörper zum Verbinden eines Deckels mit dem Behälterkörper;
- Fig. 15B: eine andere Explosionsansicht der Anordnung gemäß Fig. 15A;
- Fig. 16A: eine Ansicht des Behälterkörpers beim Ansetzen des Deckels;
- Fig. 16B: eine Seitenansicht der Anordnung gemäß Fig. 16A;
- Fig. 16C: eine Schnittansicht entlang der Linie F-F gemäß Fig. 16B;
- Fig. 17A: eine Ansicht des Behälterkörpers mit daran angesetztem Deckel;
- Fig. 17B: eine Seitenansicht der Anordnung gemäß Fig. 17A;
- Fig. 17C: eine Schnittansicht entlang der Linie C-C gemäß Fig. 17B;
- Fig. 18A: eine Ansicht des Behälterkörpers mit dem daran angeordneten Deckel, beim Öffnen;
- Fig. 18B: eine Seitenansicht der Anordnung gemäß Fig. 18A;
- Fig. 18C: eine Schnittansicht entlang der Linie G-G gemäß Fig. 18B;
- Fig. 19A: eine Ansicht des Behälterkörpers bei abgenommenem Deckel;
- Fig. 19B: eine Seitenansicht der Anordnung gemäß Fig. 19A;
- Fig. 19C: eine Schnittansicht entlang der Linie E-E gemäß Fig. 19B;
- Fig. 20A: eine Ansicht eines weiteren Ausführungsbeispiels einer Verbindungsvorrichtung, vor Ansetzen eines Verschlussmoduls an eine Ansetzkomponente in einem erfindungsgemäßen System;
- Fig. 20B: eine Seitenansicht der Anordnung gemäß Fig. 20A;
- Fig. 20C: eine Schnittansicht entlang der Linie B-B gemäß Fig. 20B;
- Fig. 21A: eine Ansicht der Verbindungsvorrichtung bei an die Ansetzkomponente angesetztem Verschlussmodul;
- Fig. 21B: eine Seitenansicht der Anordnung gemäß Fig. 21A;
- Fig. 21C: eine Schnittansicht entlang der Linie A-A gemäß Fig. 21B;
- Fig. 22A: eine Ansicht des Ausführungsbeispiels gemäß Fig. 1A, 1B bis 6A-6C, jedoch mit elektrischen Kontaktelementen an dem Verschlussmodul und der Ansetzbaugruppe, bei von der Ansetzbaugruppe gelöstem Verschlussmodul;
- Fig. 22B: eine Seitenansicht der Anordnung gemäß Fig. 22A;
- Fig. 22C: eine Schnittansicht entlang der Linie A-A gemäß Fig. 22B;
- Fig. 23A: die Verbindungsvorrichtung beim Ansetzen des Verschlussmoduls an die Ansetzbaugruppe;
- Fig. 23B: eine Seitenansicht der Anordnung gemäß Fig. 23A;
- Fig. 23C: eine Schnittansicht entlang der Linie B-B gemäß Fig. 23B;
- Fig. 24A: eine Ansicht der Verbindungsvorrichtung, bei an die Ansetzbaugruppe angesetztem Verschlussmodul;
- Fig. 24B: eine Seitenansicht der Anordnung gemäß Fig. 24A; und
- Fig. 24C: eine Schnittansicht entlang der Linie E-E gemäß Fig. 24B.

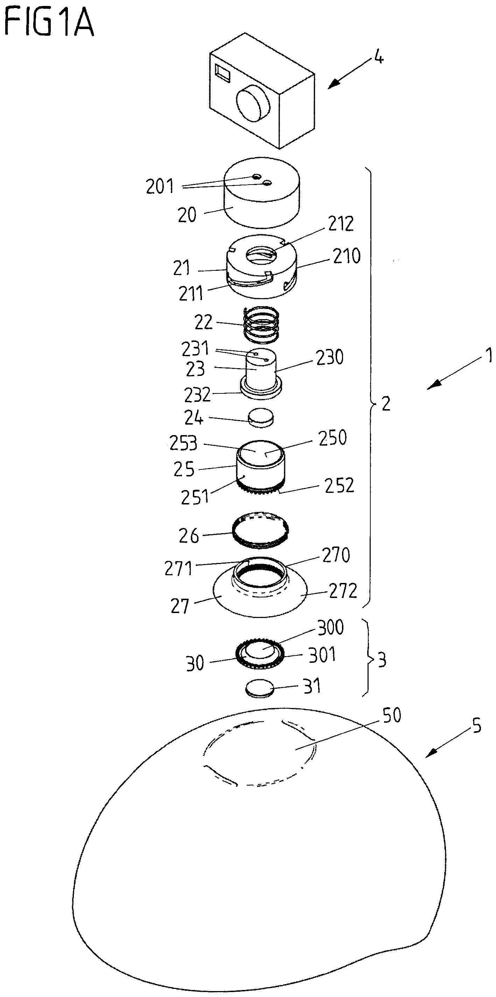

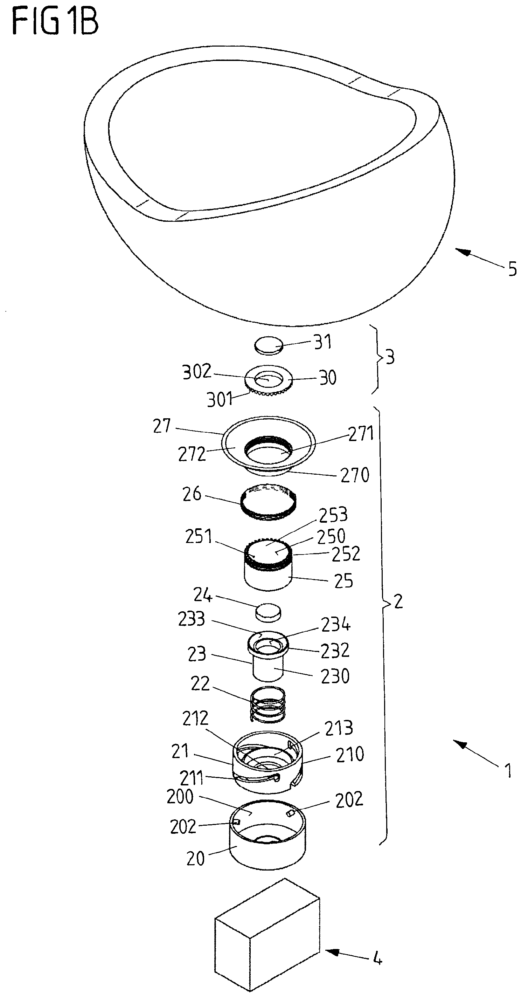

Fig. 1A, 1B bis 6A-6C zeigen ein erstes Ausführungsbeispiel einer Verbindungsvorrichtung 1, die - bei dem dargestellten Ausführungsbeispiel - zum Befestigen eines elektronischen Geräts in Form einer Kamera 4 an einem Helm 5 (z.B. einem Ski- oder Fahrradhelm) dient. Über die Verbindungsvorrichtung 1 kann die Kamera 4 in lösbarer Weise mit einer Ansetzfläche 50 des Helms 5 verbunden werden, sodass beispielsweise Videoaufzeichnungen bei Gebrauch des Helms 5 gemacht werden können.

Die Verbindungsvorrichtung 1 weist ein Verschlussmodul 2 auf, das an eine Ansetzbaugruppe 3 auf Seiten des Helms 5 angesetzt werden kann. Das Verschlussmodul 2 besteht aus einer Mehrzahl von miteinander zusammen wirkenden Teilen und ist an der Kamera 4 festgelegt, wobei die Verbindung des Verschlussmoduls 2 mit der Kamera 4 (ebenfalls) lösbar sein kann, um die Verbindungsvorrichtung 1 beispielsweise an unterschiedlichen elektronischen Geräten verwenden zu können.

Das Verschlussmodul 2 weist ein Gehäuseteil 20 auf, das zylindrisch geformt ist und über Befestigungsstellen 201 fest mit einem zentral in dem Gehäuseteil 20 aufgenommenen Verstellelement 23 verbunden ist.

Das Verstellelement 23 weist einen Schaft 230 und daran angeordnete Befestigungsstelle 231 auf, über die das Verstellelement 23 an dem Gehäuseteil 20 festgelegt ist. An einem dem Boden des Gehäuseteils 20 abgewandten Ende weist das Verstellelement 23 einen Kopfabschnitt 232 auf, der radial über den Schaft 230 nach außen vorsteht.

Das Gehäuseteil 20 und das drehfest mit dem Gehäuseteil 20 verbundene Verstellelement 23 sind fest mit der Kamera 4 verbunden.

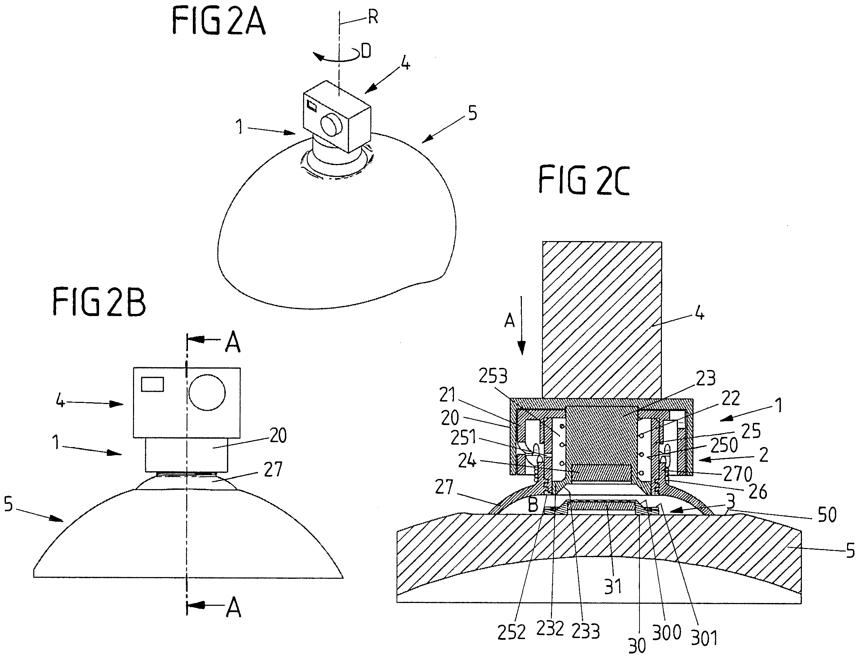

Wie beispielsweise der Schnittansicht gemäß Fig. 2C entnehmbar ist, liegt das Verstellelement 23 in einem zylindrischen Hohlraum 253 eines Zylinderteils 25 ein derart, dass der Kopfabschnitt 232 gleitend an einer Innenfläche 250 des Zylinderteils 25 geführt ist. Das Zylinderteil 25, das zylindrisch mit kreisförmigem Querschnitt geformt ist, ist fest mit einem Führungsteil 21 verbunden, das eine Öffnung 212 aufweist, durch die hindurch das Verstellelement 23 mit seinem Schaft 230 greift. Von einem dem Boden des Gehäuseteils 20 zugewandten Boden des Führungsteils 21 steht ein Bund 213 axial vor, in den das Zylinderteil 25 eingreift und über den das Zylinderteil 25 fest mit dem Führungsteil 21 verbunden ist (beispielsweise durch Verschweißen oder Verkleben).

Das Führungsteil 21 weist ebenfalls eine zylindrische Grundform auf, mit einer zylindrischen Mantelfläche 210, die sich umfänglich um das innerhalb des Führungsteils 21 aufgenommene Zylinderteil 25 herum erstreckt und somit radial außerhalb des Zylinderteils 25 angeordnet ist. An der Mantelfläche 210 sind eine Mehrzahl von umfänglich zueinander versetzten, parallelen, helixförmigen Führungsbahnen 211 gebildet, die als Kulissen in die Mantelfläche 210 eingeformt sind und in die (radial nach innen von einer Mantelfläche 200 des Gehäuseteils 20 vorstehende) Führungselemente 202 in Form von Zapfen am Gehäuseteil 20 eingreifen. Durch den Eingriff der Führungselemente 202 des Gehäuseteils 20 in die Führungsbahnen 211 des Führungsteils 21 ist das Gehäuseteil 20 (und darüber auch das Verstellelement 23) an dem Führungsteil 21 um eine Rotationsachse R zwangsgeführt, sodass bei einem Verdrehen des Gehäuseteils 20 um die Rotationsachse R die aus dem Gehäuseteil 20 und dem Verstellelement 23 gebildete Baueinheit den helixförmigen Führungsbahnen 211 folgt und dadurch das Verstellelement 23 axial innerhalb des Zylinderteils 25 bewegt wird.

Das Zylinderteil 25 ist fest mit einem Unterdruckelement 27 in Form eines elastischen Napfelements 27 verbunden, indem das Zylinderteil 25 in einen Bund 270 des Unterdruckelements 27 eingreift und über eine umfängliche Spannfeder 26 mit dem Unterdruckelement 27 verspannt ist. Das Unterdruckelement 27 ist somit fest, insbesondere auch fluiddicht, mit dem Zylinderteil 20 verbunden.

Das Verstellelement 23 ist über ein den Schaft 230 umgreifendes Vorspannelement in Form einer Druckfeder 22 gegenüber dem Führungsteil 21 und damit gegenüber dem Zylinderteil 25 vorgespannt, in Richtung der in Fig. 2C dargestellten Ausgangsstellung. In der Ausgangsstellung kommt der Kopfabschnitt 232 des Verstellelements 23 somit an einem Ende des Zylinderteils 25 zu liegen, das dem Führungsteil 21 abgewandt ist. Das Führungsteil 21 ist in dieser Stellung maximal in das Gehäuseteil 20 eingefahren.

Die Ansetzfläche 50 an dem Helm 5 dient zum Ansetzen des Unterdruckelements 27 in Form des Napfelements. An der Ansetzfläche 50 des Helms 5 ist die Ansetzbaugruppe 3 mit einem Ansetzteil 30 und einem in einer Aufnahmeöffnung 302 des Ansetzteils 30 aufgenommenen Magnetelement 31 angeordnet. An diese Ansetzbaugruppe 3 wird das Verschlussmodul 2 zum Verbinden der Kamera 4 mit dem Helm 5 angesetzt.

Das Verschlussmodul 2 weist ein Magnetelement 24 auf, das in einer Aufnahmeöffnung 234 des Verstellelements 23 aufgenommen ist und das bei Ansetzen des Verschlussmoduls 2 an die Ansetzfläche 50 mit dem Magnetelement 31 der Ansetzbaugruppe 3 magnetisch anziehend zusammenwirkt, sodass das Verschlussmodul 2 (mit der daran angeordneten Kamera 4) magnetisch zu der Ansetzbaugruppe 3 des Helms 5 hingezogen wird. An dem Verstellelement 23 ist, an der dem Gehäuseteil 20 abgewandten Seite des Kopfabschnitts 232, ein Formschlussabschnitt 233 in Form einer konischen Vertiefung gebildet, die bei Ansetzen des Verschlussmoduls 2 mit einem zugeordneten Formschlussabschnitt 300 in Form einer konischen Erhebung an dem Ansetzteil 30 in Eingriff gelangt, sodass das Verschlussmodul 2 in definierter Weise an die Ansetzbaugruppe 3 des Helms 5 angesetzt wird.

Der Formschluss zwischen den Formschlussabschnitten 233, 300 dient dazu, bei geschlossener Verbindungsvorrichtung 1 in günstiger Weise auch Querkräfte in der Ebene der Ansetzfläche 50 aufnehmen zu können. Zudem gelangt über den Formschluss das Verschlussmodul 2 in zentrierter Weise mit der Ansetzbaugruppe 3 in Eingriff.

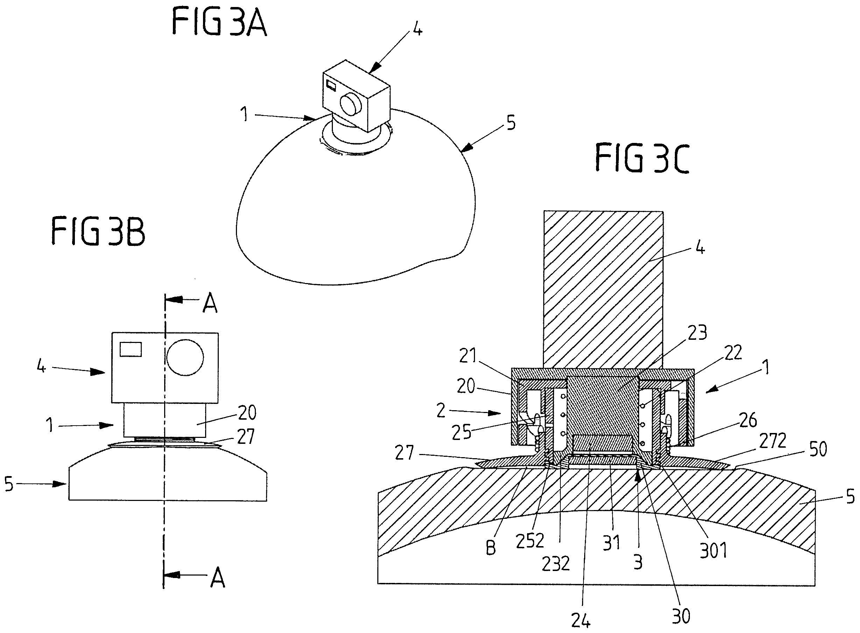

Bei Ansetzen des Verschlussmoduls 2 an die Ansetzfläche 50 wird, wie aus dem Übergang von Fig. 2A-2C hin zu Fig. 3A-3C ersichtlich, das Unterdruckelement 27 an einem über das Zylinderteil 25 radial vorstehenden, napfförmigen Randabschnitt 272 elastisch verformt, wodurch Luft aus einem zwischen dem Unterdruckelement 27 und der Ansetzfläche 50 gebildeten Raum B entweicht und somit bei Belastung des Verschlussmoduls 2 ein saugender Unterdruck zwischen dem Unterdruckelement 27 und der Ansetzfläche 50 wirkt. Auf diese Weise können an der Verbindungsvorrichtung 1 impulsartige Stoßkräfte bei Benutzung des Helms 5 aufgenommen und abgeleitet werden, sodass die Kamera 4 auch bei Stoßbelastung sicher und zuverlässig an dem Helm 5 gehalten ist.

An einem dem Ansetzteil 30 zugewandten, umlaufenden Rand des Zylinderteils 25 ist ein Eingriffsabschnitt 252 in Form einer Verzahnung gebildet, die bei Ansetzen des Verschlussmoduls 2 an die Ansetzbaugruppe 3 formschlüssig mit einem umlaufenden Eingriffsabschnitt 301 in Form einer Verzahnung an dem Ansetzteil 30 in Eingriff gelangt, wie dies aus einer Zusammenschau von Fig. 2C und 3C und Fig. 1A und 1B ersichtlich ist. Auf diese Weise wird das Zylinderteil 25 und darüber auch das Führungsteil 21 und das Unterdruckelement 27 drehfest an der Ansetzbaugruppe 3 und somit an dem Helm 5 festgelegt, sodass auch Torsionskräfte, die an dem Unterdruckelement 27 wirken, wirkungsvoll aufgenommen und abgeleitet werden können.

In verbundener Stellung ist die Kamera 4 über die Verbindungsvorrichtung 1 somit belastbar an dem Helm 5 festgelegt.

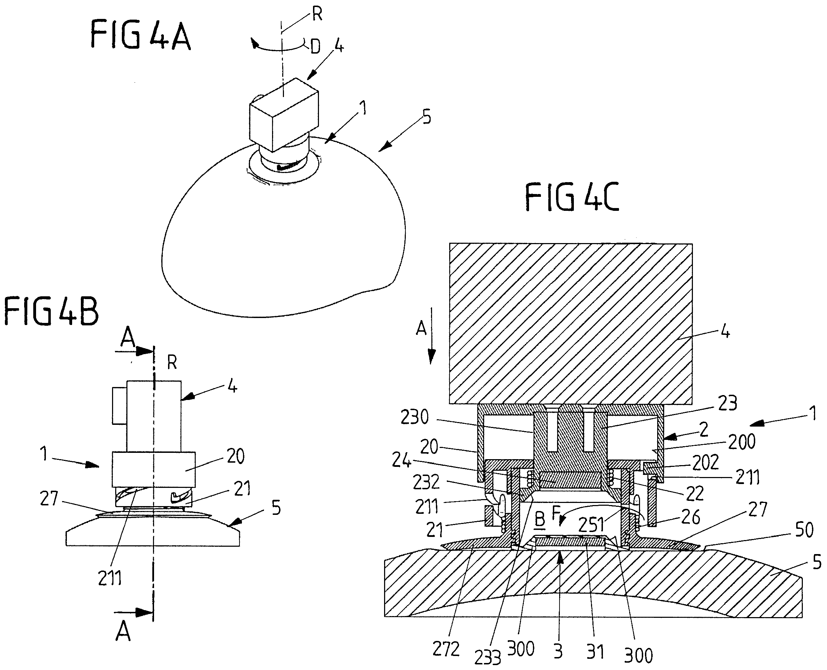

Zum Öffnen der Verbindungsvorrichtung 1 wird, wie in Fig. 4A bis 4C dargestellt, die Kamera 4 und darüber auch das Gehäuseteil 20 und das damit verbundene Verstellelement 23 in eine Drehrichtung D um die Rotationsachse R gegenüber dem Zylinderteil 25 verdreht. Aufgrund des Eingriffs der Eingriffsabschnitte 252, 301 auf Seiten des Zylinderteils 25 und des Ansetzteils 30 ist sichergestellt, dass sich bei dieser Verdrehbewegung das Zylinderteil 23 nicht mitdrehen kann und somit das Verstellelement 23 innerhalb des zylindrischen Hohlraums 253 des Zylinderteils 25 bewegt wird.

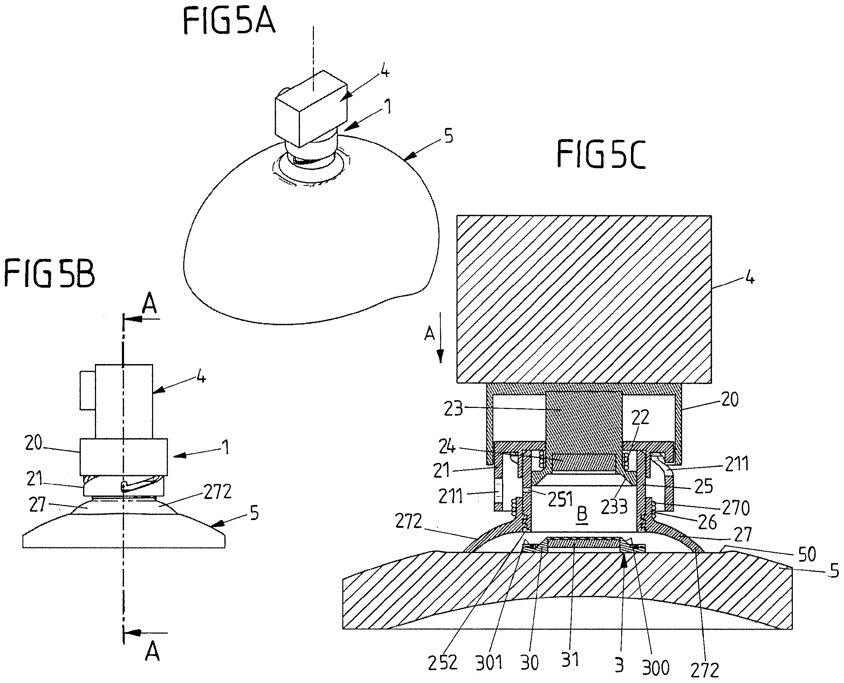

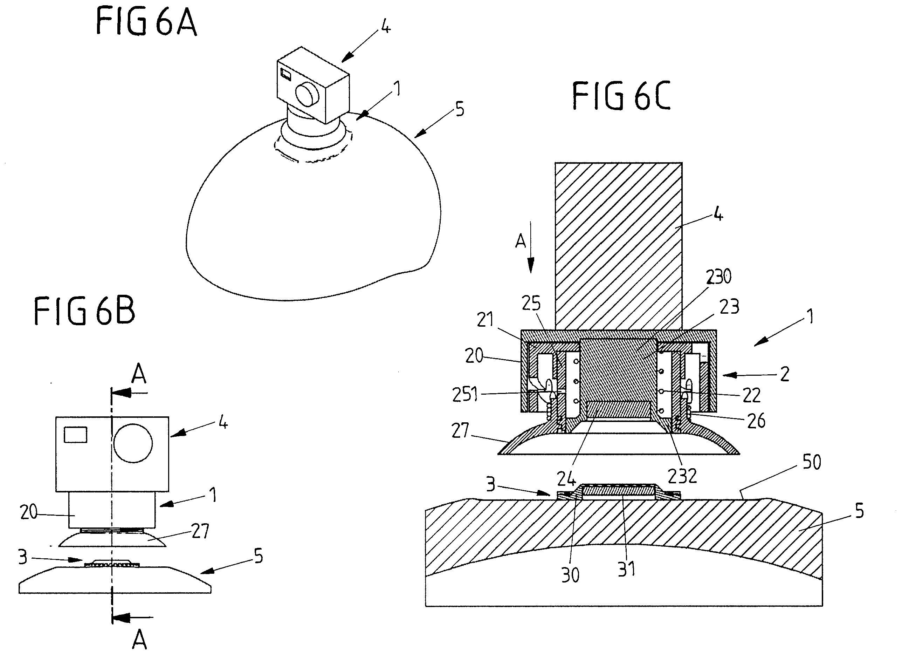

Durch Verdrehen des Gehäuseteils 20 und durch Führung des Gehäuseteils 20 am Führungsteil 21 wird das Verstellelement 23 innerhalb des Zylinderteils 25 axial entlang der Rotationsachse R verstellt und somit, wie aus Fig. 4C ersichtlich, von dem Ansetzteil 30 entfernt. Dies bewirkt zum einen, dass die Magnetelemente 24, 31 voneinander entfernt werden, sodass sich die magnetische Anziehungskraft zwischen den Magnetelementen 24, 31 abschwächt. Und dies bewirkt zum anderen, dass der Kopfabschnitt 232 innerhalb des Hohlraums 253 gleitet und eine Strömungsöffnung 251 in der Wandung des Zylinderteils 25 überstreicht, sodass durch die Strömungsöffnung 251 ein Luftstrom F in den Raum B einströmen kann und ein Unterdruck in dem Raum B somit ausgeglichen wird. Die durch das Unterdruckelement 27 bewirkte Haltekraft wird auf diese Weise aufgehoben, sodass - wie in Fig. 5A bis 5C dargestellt - der Randabschnitt 272 des Unterdruckelements 27 von der Ansetzfläche 50 abgehoben und - wie in Fig. 6A bis 6C dargestellt - das Verschlussmodul 2 zusammen mit der Kamera 4 von der Ansetzfläche 50 entfernt werden kann.

Mittels der helixförmigen Führung des Gehäuseteils 20 am Führungsteil 21 kann das Verstellen des Verstellelements 23 in leichter Weise erfolgen. Das Lösen der Verbindungsvorrichtung 1 kann damit haptisch angenehm und bequem für einen Nutzer sein, bei großer Belastbarkeit der Verbindungsvorrichtung 1 in verbundener Stellung.

Ist das Verschlussmodul 2 von der Ansetzbaugruppe 3 getrennt worden, so stellt sich das Verstellelement 23, aufgrund der vorspannenden Wirkung des Vorspannelements 22 in Form der Druckfeder, in seine Ausgangsstellung zurück, unter Verdrehen des Zylinderteils 25 und des Verstellelements 23 relativ zueinander. Das Verschlussmodul 2 kann somit wiederum an die Ansetzbaugruppe 3 angesetzt werden, wenn dies gewünscht ist.

Über den Kopfabschnitt 232, der (weitestgehend) fluiddicht in dem Hohlraum 253 des Zylinderteils 25 einliegt, wird bei verbundener Verbindungsvorrichtung 1 eine fluiddichte Trennung zwischen der Strömungsöffnung 251 und dem zwischen dem Unterdruckelement 27 und der Ansetzfläche 50 gebildeten Raum B geschaffen. Durch Verstellen des Verstellelements 23 innerhalb des Hohlraums 253 gelangt diese Strömungsöffnung 251 in Strömungsverbindung mit dem Raum B, sodass Luft in den Raum B einströmen kann und die Verbindungsvorrichtung 1 damit getrennt werden kann.

Ein Unterdruck zwischen dem Unterdruckelement 27 und der Ansetzfläche 50 wirkt insbesondere bei stoßartiger, kurzzeitiger Belastung. Durch Belastung (zum Beispiel auf Zug) an dem Verschlussmodul 2 wirkt eine Kraft in Richtung einer Vergrößerung des Raums B, die zu einem Unterdruck in diesem Raum B führt. Mittels des flächig dichtend an der Ansetzfläche 50 anliegenden Unterdruckelements 27 können somit insbesondere stoßartig wirkende Belastungen wirkungsvoll aufgefangen werden.

Zusätzlich wird ein Halt über die Magnetelemente 24, 31 bereitgestellt, sodass das Verschlussmodul 2 auch magnetisch anziehend an der Ansetzbaugruppe 3 gehalten wird. Die Magnetelemente 24, 31 unterstützen hierbei zusätzlich das Ansetzen des Verschlussmoduls 2 und der Ansetzbaugruppe 3 aneinander, unter Anpressen des Unterdruckelements 27 an die Ansetzfläche 50.

Weil ein zwischen dem Unterdruckelement 27 und der Ansetzfläche 50 entstehender Unterdruck insbesondere bei stoßartigen Belastungen wirkt, kann mittels der Verbindungsvorrichtung 1 auch ein Notabreißen bei größeren, länger andauernden Belastungen sichergestellt werden. So kann beispielsweise bei Überschreiten einer (vorbestimmten) Grenzkraft die Kamera 4 von dem Helm 5 abgerissen werden, unter Lösen des Unterdruckelements 27 von der Ansetzfläche 50. Hierzu können das Unterdruckelement 27 und die an dem Unterdruckelement 27 bereitgestellte Unterdruckkraft entsprechend dimensioniert sein.

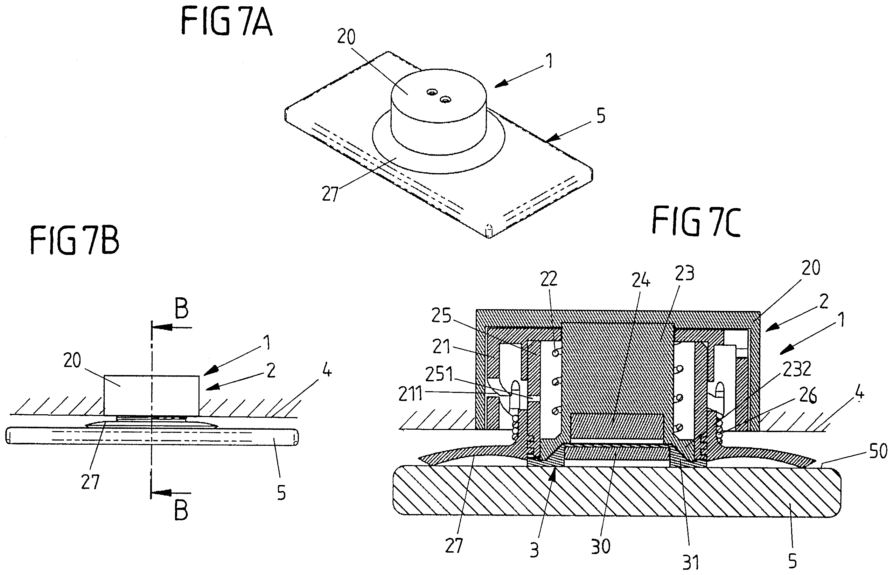

Bei einem anderen Ausführungsbeispiel, dargestellt in Fig. 7A bis 7C, dient die Verbindungsvorrichtung 1 zum Befestigen eines Mobiltelefons 5 oder eines anderen elektronischen Geräts (zum Beispiel eines Navigationsgeräts) beispielsweise in einem Fahrzeug, beispielsweise am Armaturenbrett oder an der Windschutzscheibe des Fahrzeugs. In diesem Fall ist die Ansetzbaugruppe 3 erfindungsgemäß an einer als Ansetzfläche 50 dienenden Gehäusefläche des Mobiltelefons 5 angeordnet, während das Verschlussmodul 2 am Fahrzeug angeordnet sein kann, beispielsweise indem das Verschlussmodul 2 zumindest teilweise in ein Armaturenbrett integriert und somit versenkt ist.

Ansonsten ist das Ausführungsbeispiel gemäß Fig. 7A bis 7C identisch wie vorangehend beschrieben, sodass vollständig auf die obigen Ausführungen verwiesen werden soll.

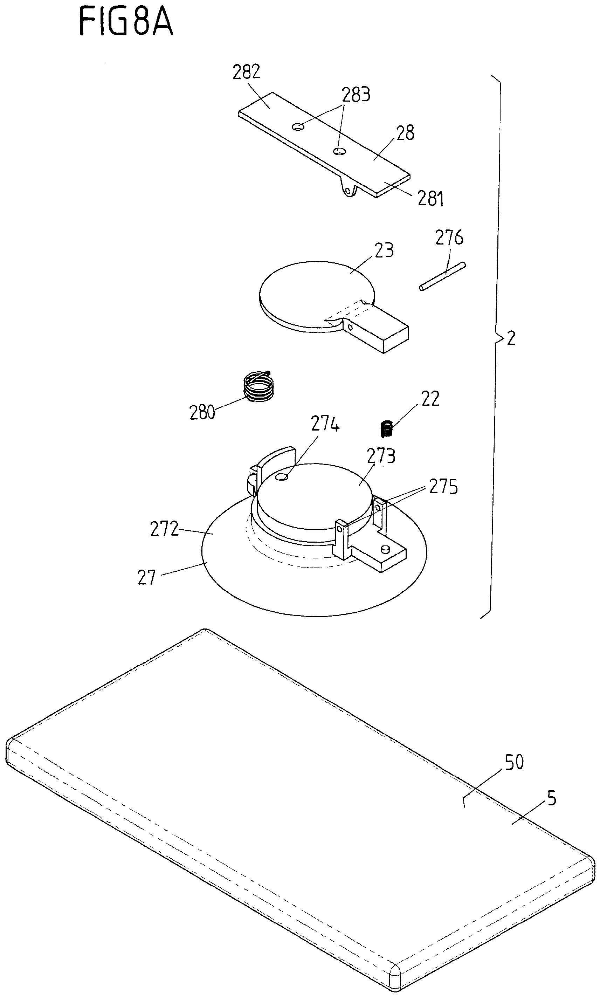

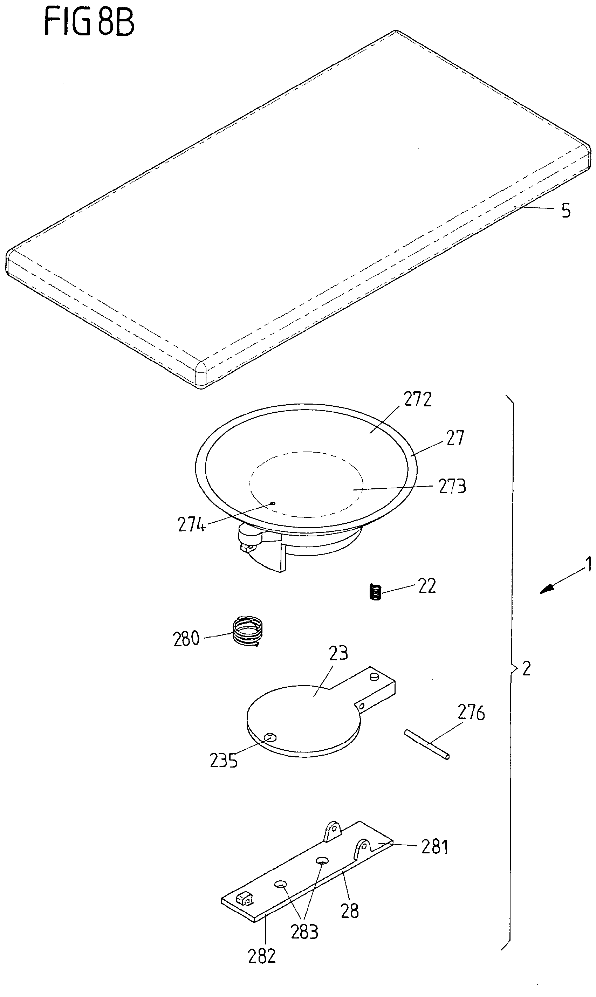

Bei einem in Fig. 8A, 8B bis 10A-10C dargestellten Ausführungsbeispiel einer Verbindungsvorrichtung 1 ist ein Verschlussmodul 2 an eine Ansetzkomponente 50 in Form einer Ansetzfläche an einem elektronischen Gerät 5 oder einer sonstigen Baugruppe anzusetzen.

Das Verschlussmodul 2 weist ein Unterdruckelement 27 auf, das einen flexiblen Randabschnitt 272 aufweist und mit dem flexiblen Randabschnitt 272 unter elastischer Deformation zum Bereitstellen einer Unterdruckwirkung mit der Ansetzkomponente 50 in Form der Ansetzfläche an der Baugruppe 5 zu verbinden ist. Der flexible Randabschnitt 272 erstreckt sich umfänglich als Napfelement um einen Körper 273, an dem eine Strömungsöffnung 274 gebildet ist und an dem ein Verstellelement 23 in Form eines Klappenelements über Lagerelemente 275 und ein Achselement 276 gelenkig gelagert ist.

An dem Achselement 276 ist zudem ein Betätigungselement 28 angeordnet, das mit dem Verstellelement 23 in Form des Klappenelements wechselwirkt, um das Verstellelement 23 zum Lösen des Verschlussmoduls 2 von der Ansetzkomponente 50 zu betätigen.

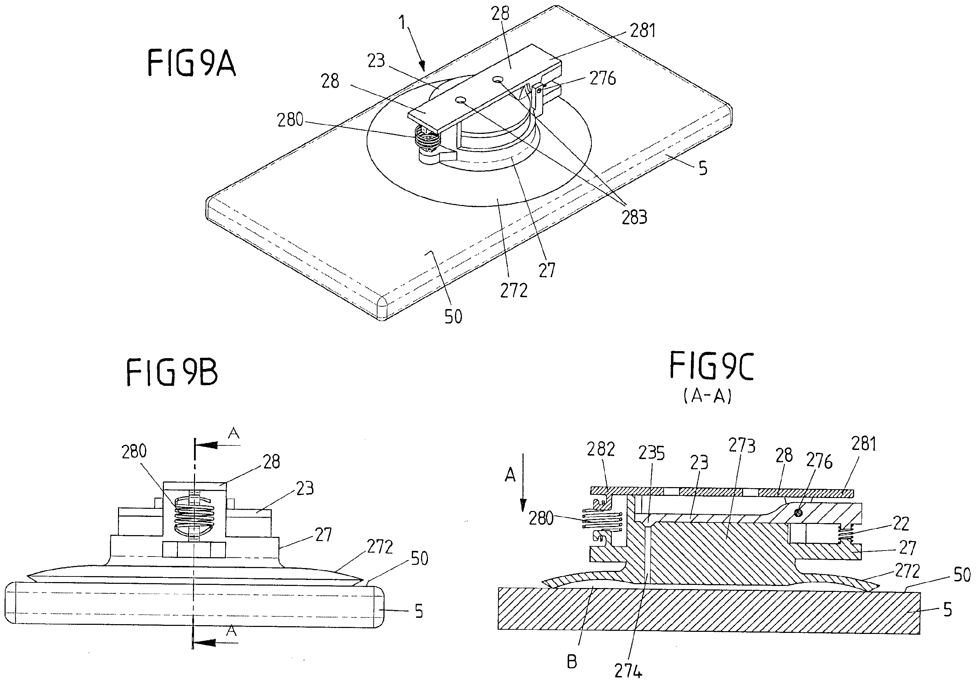

Wie zum Beispiel aus Fig. 9A und Fig. 9C ersichtlich, ist das Betätigungselement 28 über ein Federelement 280 in Form einer Zugfeder in Richtung einer in Fig. 9A-9C dargestellten Ausgangsstellung federvorgespannt. Zudem ist das Verstellelement 23 über ein Vorspannelement 22 in Form einer Druckfeder in die in Fig. 9A-9C dargestellte Schließstellung federvorgespannt, in der das Verstellelement 23 die Strömungsöffnung 274 in dem Körper 273 des Unterdruckelements 27 mit einem in die Strömungsöffnung 274 eingreifenden Schließelement 235 in Form eines Zapfens fluiddicht verschließt, sodass insbesondere keine Luft durch die Strömungsöffnung 274 zwischen das Unterdruckelement 27 und die Ansetzkomponente 50 strömen kann.

In der in Fig. 9A-9C dargestellten Stellung, in der das Verschlussmodul 2 an die Ansetzkomponente 50 der Baugruppe 5 angesetzt ist, besteht eine Unterdruckwirkung zwischen dem Unterdruckelement 27 und der Ansetzkomponente 50. Aufgrund dieser Unterdruckwirkung wird das Verschlussmodul 2 an der Ansetzkomponente 50 gehalten, sodass das Verschlussmodul 2 nicht ohne weiteres, jedenfalls nicht ohne Aufheben der Unterdruckwirkung, von der Ansetzkomponente 50 abgenommen werden kann.

An dem Betätigungselement 28 sind Befestigungsstellen 283 in Form zum Beispiel von Schraublöchern vorgesehen, über die das Betätigungselement 28 mit einer zugeordneten, weiteren Baugruppe verbunden werden kann. Beispielsweise kann auf diese Weise das Betätigungselement 28 an einem Fahrzeug, zum Beispiel an einem Armaturenbrett eines Kraftfahrzeugs, festgelegt werden, um auf diese Weise eine zum Beispiel ein elektronisches Gerät in Form eines Mobiltelefons oder dergleichen verwirklichende Baugruppe 5 an dem Fahrzeug (lösbar) festzulegen.

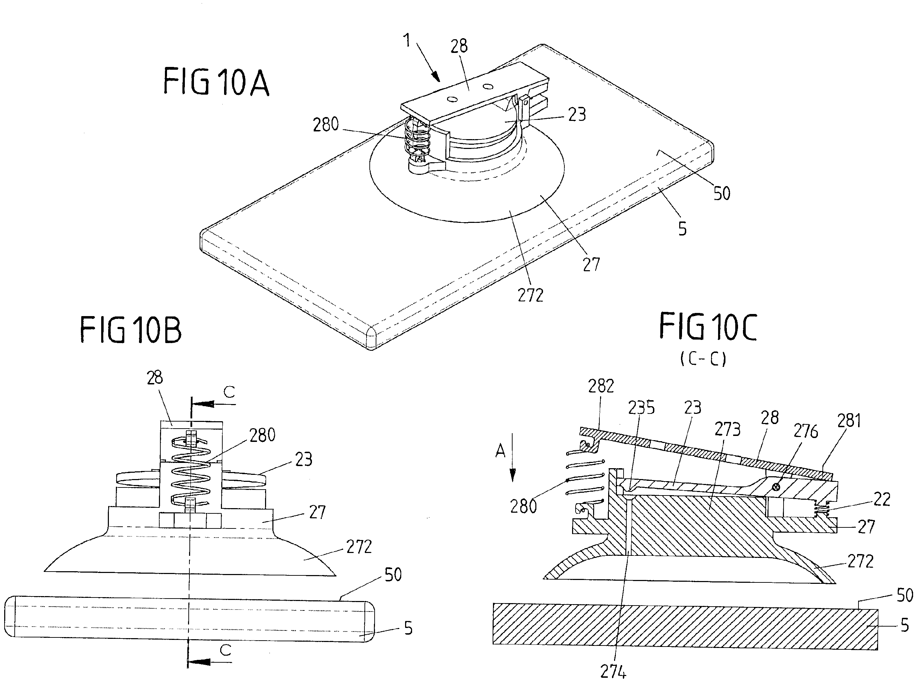

Zum Lösen des Verschlussmoduls 2 von der Ansetzkomponente 50 wird das Verstellelement 23 durch Betätigung des Betätigungselements 28 verstellt, sodass die Strömungsöffnung 274 freigegeben wird und ein Luftstrom durch die Strömungsöffnung 274 zwischen das Unterdruckelement 27 und die Ansetzkomponente 50 strömen kann, wie dies in Fig. 10A-10C dargestellt ist. Eine Unterdruckwirkung zwischen dem Unterdruckelement 27 und der Ansetzkomponente 50 ist somit aufgehoben, sodass keine Haltekräfte zwischen dem Verschlussmodul 2 und der Ansetzkomponente 50 (mehr) wirken.

Zum Betätigen wird das Betätigungselement 28 um das Achselement 276 relativ zu dem Unterdruckelement 27 verkippt, wie dies aus Fig. 10A-10C ersichtlich ist. Dadurch wirkt das Betätigungselement 28 mit einem von dem Kopfende 282 abliegenden Abschnitt 281 auf das Verstellelement 23 ein und verschwenkt dieses ebenfalls um das Achselement 276. Das Verstellelement 23 wird somit - mittelbar über das Betätigungselement 28 - aus seiner Schließstellung heraus bewegt und gibt die Strömungsöffnung 274 frei, sodass Verschlussmodul 2 von der Ansetzkomponente 50 gelöst werden kann.

Bei Betätigung des Betätigungselements 28 wird das Federelement 280 auf Zug gespannt, wie dies aus Fig. 10A-10C ersichtlich ist. Zudem wird das Vorspannelement 22 auf Druck gespannt. Nach Beendigung der Betätigung gelangen das Betätigungselement 28 und das Verstellelement 23 aufgrund der Federwirkung somit zurück in ihre jeweilige Ausgangsstellung, dargestellt in Fig. 9A-9C, sodass bei nicht betätigtem Betätigungselement 28 die Strömungsöffnung 274 verschlossen ist und das Unterdruckelement 27 somit zur erneuten Verbindung des Verschlussmoduls 2 an eine Ansetzkomponente 50 angesetzt werden kann.

Bei dem Ausführungsbeispiel gemäß Fig. 8A, 8B bis 10A-10C können Magnetelemente einerseits an dem Verschlussmodul 2 und andererseits an der Ansetzkomponente 50 angeordnet sein, um ein Ansetzen des Verschlussmoduls 2 an die Ansetzkomponente 50 magnetisch zu unterstützen. Dies ist jedoch nicht zwingend. Die Verbindungsvorrichtung 1 kann auch nicht magnetisch ausgestaltet sein und einen Halt des Verschlussmoduls 2 an der Ansetzkomponente 50 allein aufgrund der Unterdruckwirkung bewirken.

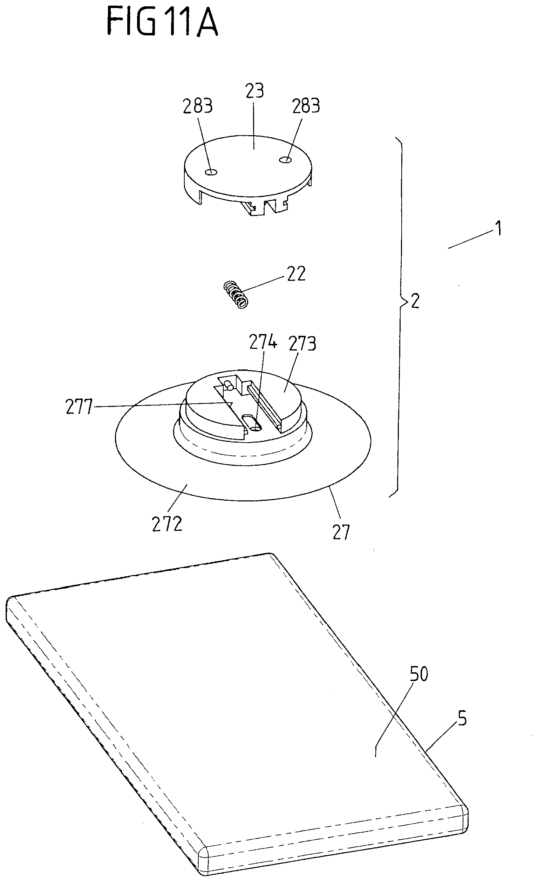

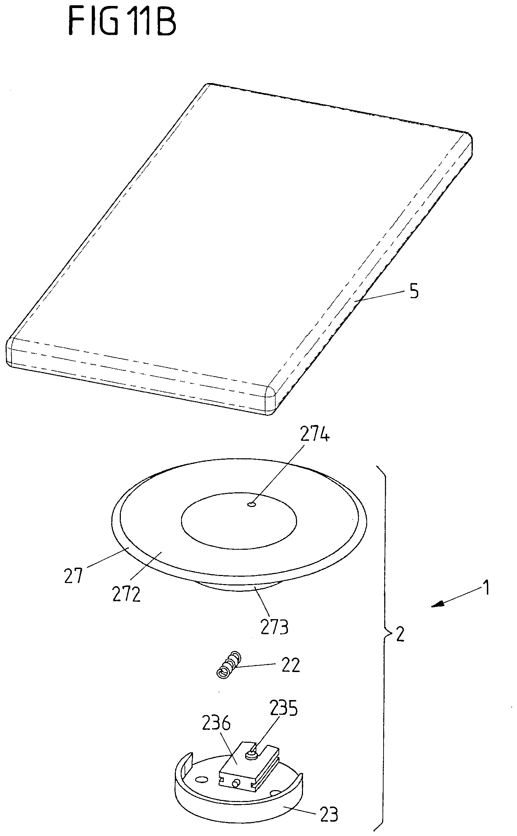

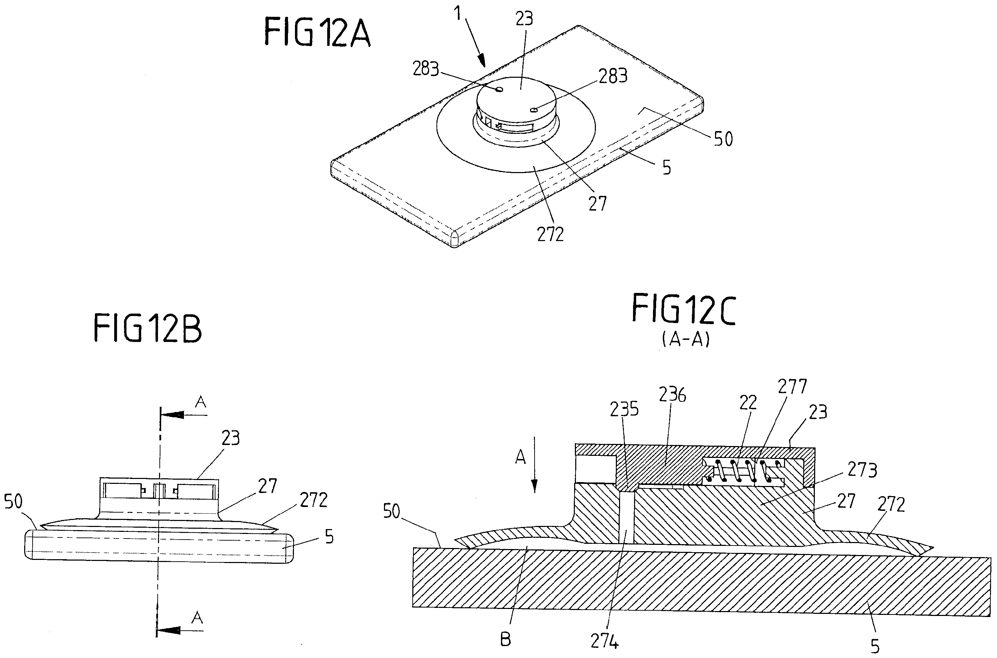

Bei einem in Fig. 11A, 11B bis 13A-13C dargestellten Ausführungsbeispiel ist, im Unterschied zu dem Ausführungsbeispiel gemäß Fig. 8A, 8B bis 10A-10C, ein Verstellelement 23 verschiebbar an einem Unterdruckelement 27 eines Verschlussmoduls 2 einer Verbindungsvorrichtung 1 angeordnet. Das Unterdruckelement 27 weist wiederum einen flexiblen, elastisch verformbaren Randabschnitt 272 in Form eines Napfelements auf, mit dem das Unterdruckelement 27 an eine flächige Ansetzkomponente 50 einer Baugruppe 5 angesetzt werden kann, um in angesetzter Stellung (Fig. 12A-12C) aufgrund einer Unterdruckwirkung einen Halt des Verschlussmoduls 2 an der Ansetzkomponente 50 zu bewirken.

An einem Körper 273 des Unterdruckelements 27 ist bei diesem Ausführungsbeispiel ein Verstellelement 23 entlang einer quer zu einer Ansetzrichtung A erstreckten Führungsrichtung verschiebbar geführt, indem das Verstellelement 23 mit einem Führungsstück 236 in eine zugeordnete Führungseinrichtung 277 an dem Körper 273 des Unterdruckelements 27 eingreift.

In einer Ausgangsstellung, dargestellt in Fig. 12A-12C, verschließt das Verstellelement 23 mit einem Schließelement 235 in Form eines Zapfens eine Strömungsöffnung 274 in den Körper 273, sodass eine Unterdruckwirkung zwischen dem Unterdruckelement 27 und der Ansetzkomponente 50 für einen Halt des Verschlussmoduls 2 an der Ansetzkomponente 50 besteht, wenn das Verschlussmodul 2 an die Ansetzkomponente 50 angesetzt ist. Insbesondere ist bei verschlossener Strömungsöffnung 274 ein Zustrom von Luft zwischen das Unterdruckelement 27 und die Ansetzkomponente 50 über die Strömungsöffnung 274 verhindert.

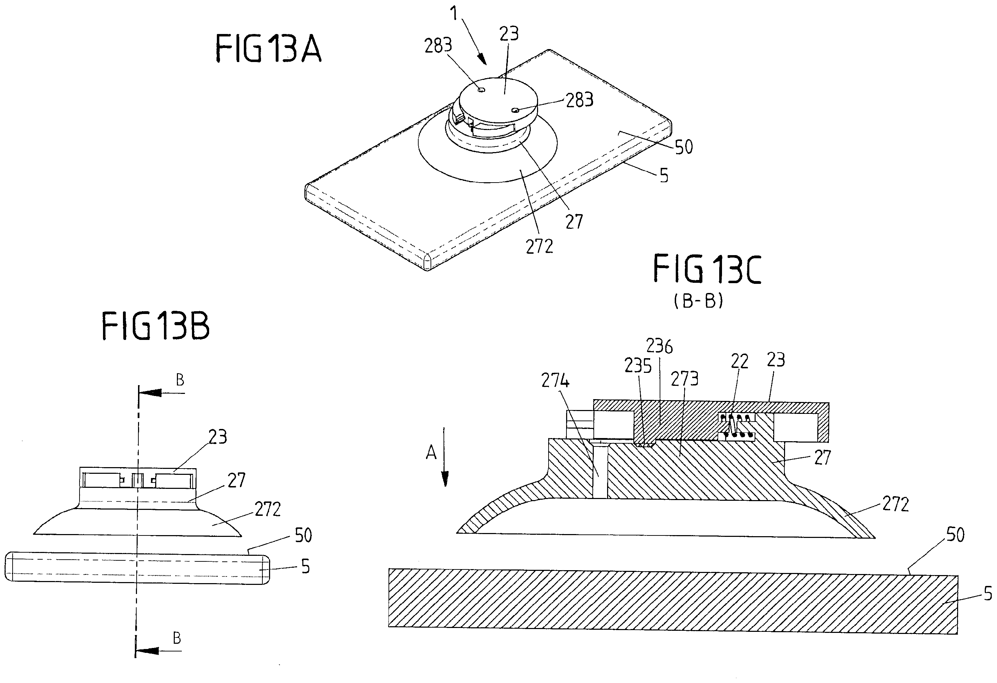

Zum Lösen des Verschlussmoduls 2 von der Ansetzkomponente 50 kann das Verstellelement 23 quer zur Ansetzrichtung A an dem Körper 273 des Unterdruckelements 27 verschoben werden, wie dies in Fig. 13A-13C dargestellt ist. Dadurch wird ein zwischen dem Verstellelement 23 und dem Unterdruckelement 27 wirkendes Vorspannelement in Form einer Druckfeder auf Druck gespannt, und die Strömungsöffnung 274 wird freigegeben, sodass ein Luftstrom zwischen das Unterdruckelement 27 und die Ansetzkomponente 50 strömen kann und eine Unterdruckwirkung zwischen dem Unterdruckelement 27 und der Ansetzkomponente 50 somit aufgehoben wird.

Nach Beendigung der Betätigung wird das Verstellelement 23 aufgrund der Druckwirkung des Vorspannelements 22 selbsttätig in die Ausgangsstellung gemäß Fig. 12A-12C zurückgestellt, sodass in der Ausgangsstellung bei nicht betätigtem Verstellelement 23 die Strömungsöffnung 274 wiederum verschlossen ist und das Verschlussmodul 2 somit erneut an eine zugeordnete Ansetzkomponente 50 einer Baugruppe 5 angesetzt werden kann.

Das Verstellelement 23 weist Befestigungsstellen 283 auf, über die eine zugeordnete Baugruppe an dem Verstellelement 23 befestigt werden kann. Eine Betätigung des Verstellelements 23 erfolgt somit bei einer Relativbewegung zwischen der mit dem Verstellelement 23 verbundenen Baugruppe und der Baugruppe 5, an die das Verschlussmodul 2 angesetzt ist. Beispielsweise kann ein Nutzer an der Baugruppe 5 angreifen, um auf diese Weise das Verstellelement 23 zu dem Unterdruckelement 27 zu verschieben und die Baugruppe 5 somit von dem Verschlussmodul 2 zu lösen.

Bei der Baugruppe 5 kann es sich wiederum zum Beispiel um ein elektronisches Gerät in Form eines Mobiltelefons oder dergleichen handeln. Das Verstellelement 23 kann demgegenüber beispielsweise an einem Fahrzeug, zum Beispiel an einem Armaturenbrett eines Kraftfahrzeugs, festgelegt sein, sodass über die Verbindungsvorrichtung 1 die Baugruppe 5 lösbar an dem Fahrzeug befestigt werden kann.

Bei den bisher beschriebenen Ausführungsbeispielen ist das Unterdruckelement als elastisches Napfelement ausgebildet. Dies ist jedoch nicht zwingend. Grundsätzlich können auch starre, nicht elastische Elemente zum Bewirken eines Unterdrucks und somit zum Bereitstellen einer Haltekraft zusammenwirken, obwohl dies nicht im Rahmen der vorliegenden Erfindung liegt.

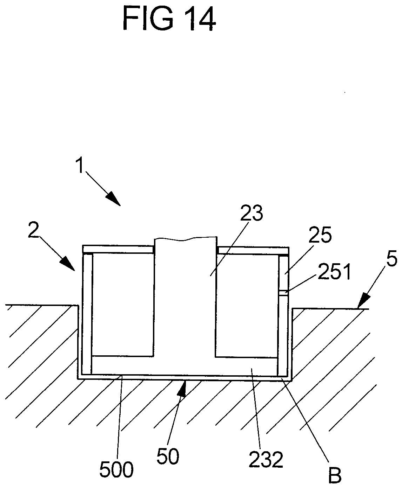

Dies ist beispielhaft in einer schematischen Darstellung eines Ausführungsbeispiels in Fig. 14 dargestellt.

Die Verbindungsvorrichtung 1 weist ein Verschlussmodul 2 auf, das an eine Baugruppe 5 angesetzt werden kann. So kann das Verschlussmodul 2 der Verbindungsvorrichtung 1, das starr und unelastisch ausgebildet ist, beispielsweise passgenau in eine Ansetzkomponente 50 in Form einer in der Baugruppe 5 gebildeten Öffnung 500 eingesetzt werden, sodass das Zylinderteil 23 im Wesentlichen fluiddicht innerhalb der Öffnung 500 aufgenommen ist. Bei Belastung des Verschlussmoduls 2 entsteht ein Unterdruck zwischen dem Zylinderteil 25 und den Wandungen der Öffnung 500, sodass das Verschlussmodul 2 an der Baugruppe 5 festgelegt ist. Ein innerhalb des Zylinderteils 25 verstellbares Verstellelement 23 kann ganz analog wie vorangehend beschrieben verstellt werden, um zum Lösen der Verbindungsvorrichtung 1 einen Strömungsweg zwischen einer Strömungsöffnung 251 in dem Zylinderteil 25 und einem zwischen dem Zylinderteil 25 und den Wandungen der Öffnung 500 gebildeten Raum freizugeben, sodass Luft in den Raum einströmen kann und das Zylinderteil 25 somit aus der Öffnung 500 entnommen werden kann.

Das Zylinderteil 25 kann passgenau in die Öffnung 500 einzusetzen sein und damit einen fluiddichten Übergang zwischen dem Zylinderteil 25 und den Wandungen der Öffnung 500 bewirken. Die Außenform des Zylinderteils 25 kann hierbei kreiszylindrisch sein, wobei das Zylinderteil 25 auch eine andere Außenform, beispielsweise eine vieleckige Außenform oder eine beliebige andere Querschnittsform aufweisen kann.

Zusätzlich ist auch denkbar und möglich, beispielsweise außenseitig des Zylinderteils 25 ein oder mehrere umlaufende Dichtringe in Form von Dichtlippen oder dergleichen vorzusehen, die den Übergang zwischen dem Zylinderteil 25 und den Wandungen der Öffnung 500 fluiddicht abdichten.

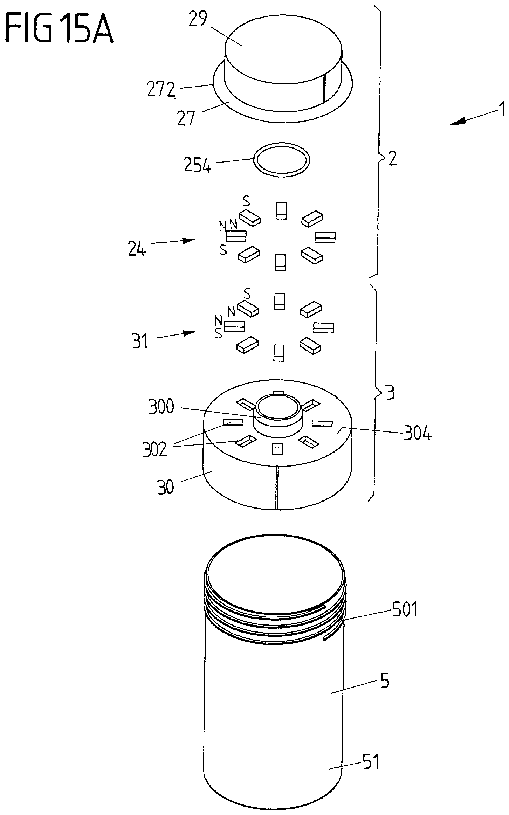

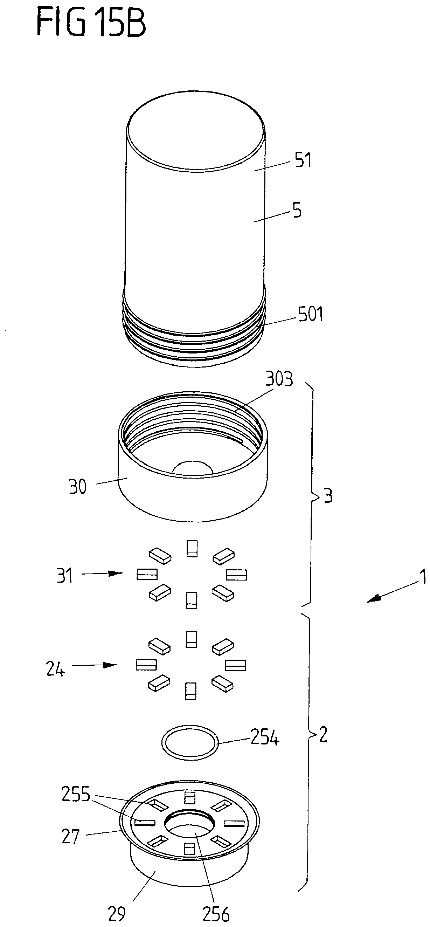

Fig. 15A, 15B bis 19A-19C zeigen ein Ausführungsbeispiel eines Behälters in Form einer Trinkflasche, bei der ein Behälterkörper 51 einer Baugruppe 5 mit einem Deckel 29 verbunden werden kann, um den Behälterkörper 51 zu verschließen. Der Deckel 29 ist Bestandteil eines Verschlussmoduls 2 einer Verbindungsvorrichtung 1, über die der Deckel 29 fest, aber lösbar mit dem Behälterkörper 51 verbunden werden kann.

Die Verbindungsvorrichtung 1 wird durch das Verschlussmodul 2, dessen Bestandteil der Deckel 29 ist, und eine Ansetzbaugruppe 3 mit einem Ansetzteil 30, das über ein Gewinde 501 mit dem Behälterkörper 51 zu verbinden ist, gebildet. Das Ansetzteil 30 weist einen Formschlussabschnitt 300 in Form eines vorstehenden Zapfenstücks auf, der eine zentrale Öffnung aufweist, durch die ein Nutzer bei abgenommenem Deckel 29 zum Beispiel aus der Trinkflasche trinken kann.

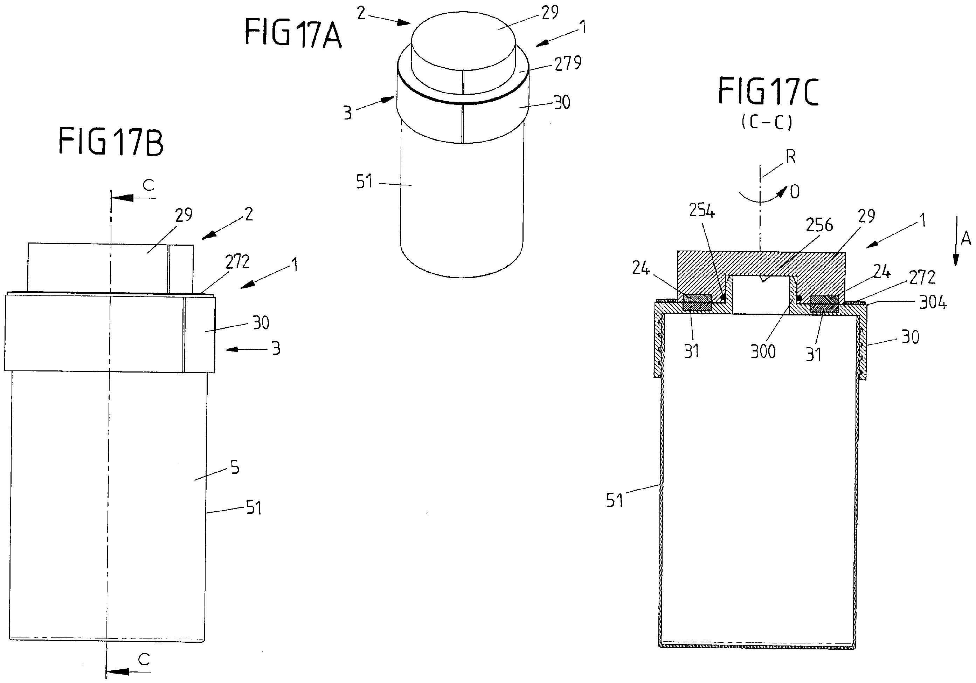

Der Deckel 29 des Verschlussmoduls 2 bildet zusammen mit einem flexiblen, umfänglichen Randabschnitt 272 ein Unterdruckelement 27 aus, das in eine Ansetzrichtung A an das Ansetzteil 30 der Ansetzbaugruppe 3 angesetzt werden kann und in angesetzter Stellung (Fig. 17A-17C) unter Unterdruckwirkung an dem Ansetzteil 30 gehalten wird. Innenseitig des Deckels 29 ist eine Eingriffsöffnung 256 gebildet, in die bei angesetztem Verschlussmodul 2 der Formschlussabschnitt 300 des Ansetzteils 30 eingreift. An der inneren Mantelfläche der Eingriffsöffnung 256 ist eine Dichtung 254 in Form eines O-Rings angeordnet, die einen Übergang zwischen dem Deckel 29 und dem Formschlussabschnitt 300 fluiddicht, insbesondere feuchtigkeitsdicht, abschließt, sodass Flüssigkeit nicht aus dem Behälter eine 50 nach draußen dringen kann, wenn der Deckel 29 an den Behälterkörper 51 angesetzt ist.

An einer dem Deckel 21 zugewandten Oberfläche 304 weist das Ansetzteil 30 Aufnahmeöffnungen 302 auf, in die Magnetelemente 31 eingesetzt und mit dem Ansetzteil 30 verbunden sind. Ebenso sind innenseitig des Deckels 29 Aufnahmeöffnungen 255 gebildet, in die Magnetelemente 24 eingesetzt und somit an dem Deckel 29 gehalten sind.

Die Magnetelemente 31 an dem Ansetzteil 30 einerseits und die Magnetelemente 24 an den Deckel 29 andererseits sind, betrachtet in Umfangsrichtung um die Ansetzrichtung A, zueinander gleichverteilt und alternierend polarisiert. Ein Magnetelement 31 des Ansetzteils 30 weist somit mit einem Nordpol N hin zu dem Deckel 29, während benachbarte Magnetelemente 31 jeweils mit einem Südpol S hin zu dem Deckel 29 weisen und sodann wieder Nordpole N folgen. Ebenso weist ein Magnetelement 24 des Deckels 29 mit einem Südpol S hin zu dem Ansetzteil 30, während benachbarte Magnetelemente 24 jeweils mit einem Nordpol N hin zu dem Ansetzteil 30 weisen und sodann wieder Südpole S folgen.

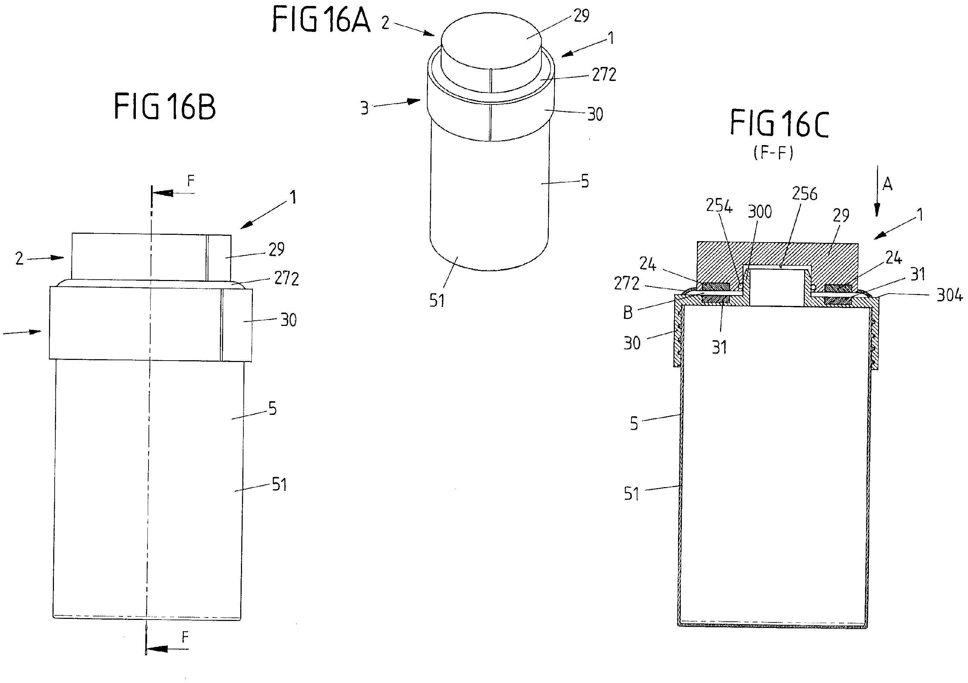

Bei Ansetzen des Deckels 29 an das Ansetzteil 30 zum Schließen der Trinkflasche ziehen sich ungleichnamige Pole der Magnetelemente 24, 31 an, sodass der Deckel 29 hin zu dem Ansetzteil 30 gezogen wird, dabei der Formschlussabschnitt 300 mit der Eingriffsöffnung 256 in Eingriff gelangt und unter elastischer Deformation des flexiblen Randabschnitts 272 eine Unterdruckwirkung zwischen dem Deckel 29 und dem Ansetzteil 30 bereitgestellt wird (siehe den Übergang von Fig. 16A-16C hin zu der angesetzten Stellung gemäß Fig. 17A-17C). In der angesetzten Stellung (Fig. 17A-17C) ist der Deckel 29 somit zum einen aufgrund der magnetischen Anziehung zwischen den Magnetelementen 24, 31 und zudem aufgrund Unterdruckwirkung an dem Ansetzteil 30 gehalten.

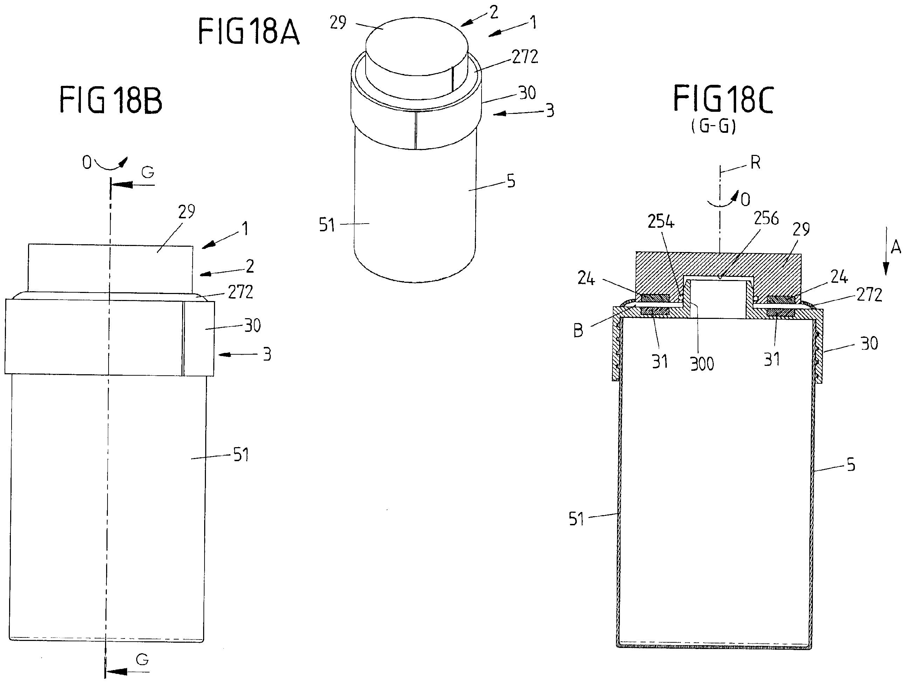

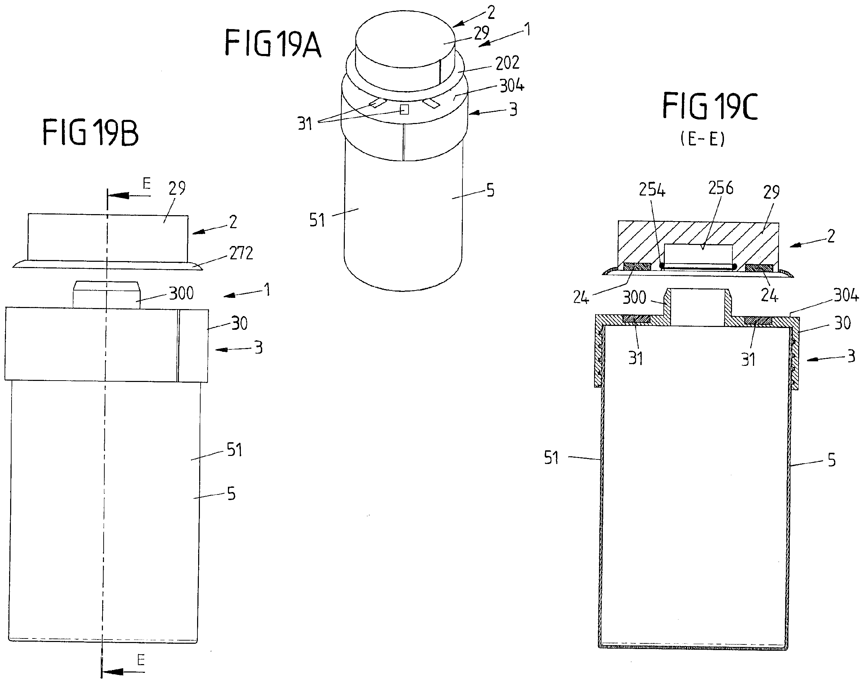

Zum Lösen des Deckels 29 von dem Ansetzteil 30 und somit von dem Behälterkörper 51 kann der Deckel 29 entlang einer Öffnungsrichtung O, entlang derer der Deckel 29 um eine durch den Eingriff des Formschlussabschnitts 300 in die Eingriffsöffnung 256 definierte Rotationsachse R zu dem Ansetzteil 30 drehbar ist, verdreht werden, wodurch die Magnetelemente 24, 31 mit gleichnamigen Polen einander angenähert werden und somit eine magnetische Abstoßung zwischen den Magnetelementen 24, 31 entsteht. Diese magnetische Abstoßung kann die Unterdruckwirkung zwischen dem Deckel 29 und dem Ansetzteil 30 abschwächen oder gar übersteigen, sodass der Deckel 29 entgegen der Ansetzrichtung A in einfacher Weise von dem Ansetzteil 30 gelöst und die Trinkflasche somit geöffnet werden kann. Dies ist im Übergang von Fig. 18A-18C hin zu Fig. 19A-19C dargestellt. Bei dieser Verdrehung kann auch eine Strömungsöffnung geöffnet werden.

Eine Verbindung eines Deckels 29 mit einem Behälter 5 der beschriebenen Art ist nicht nur bei einer Trinkflasche, zum Beispiel zur Verwendung an einem Fahrrad, denkbar und möglich, sondern kann auch an ganz anderen, beliebigen Behältern, die über einen Deckel zu verschließen sind, verwendet werden.

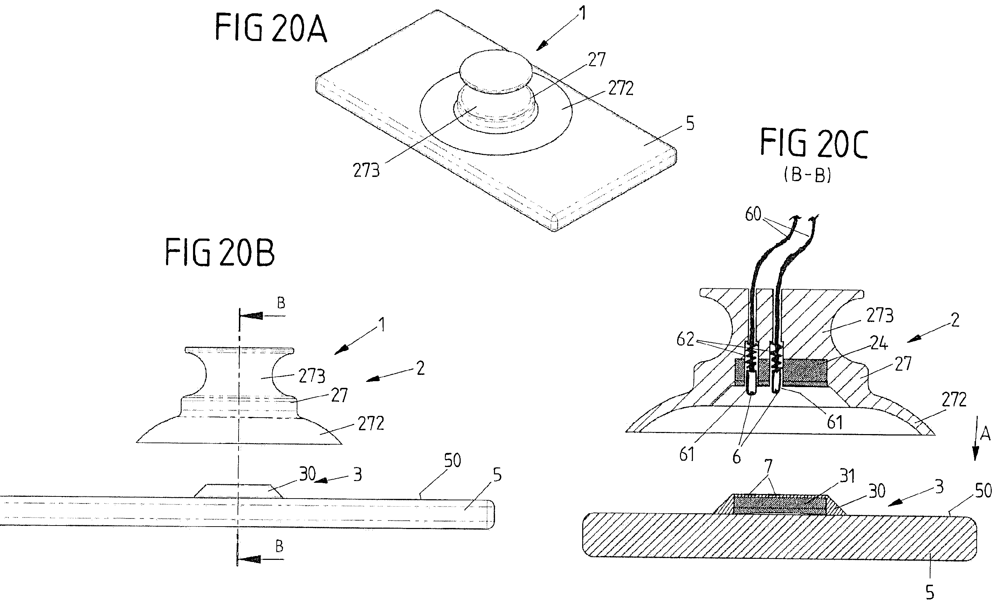

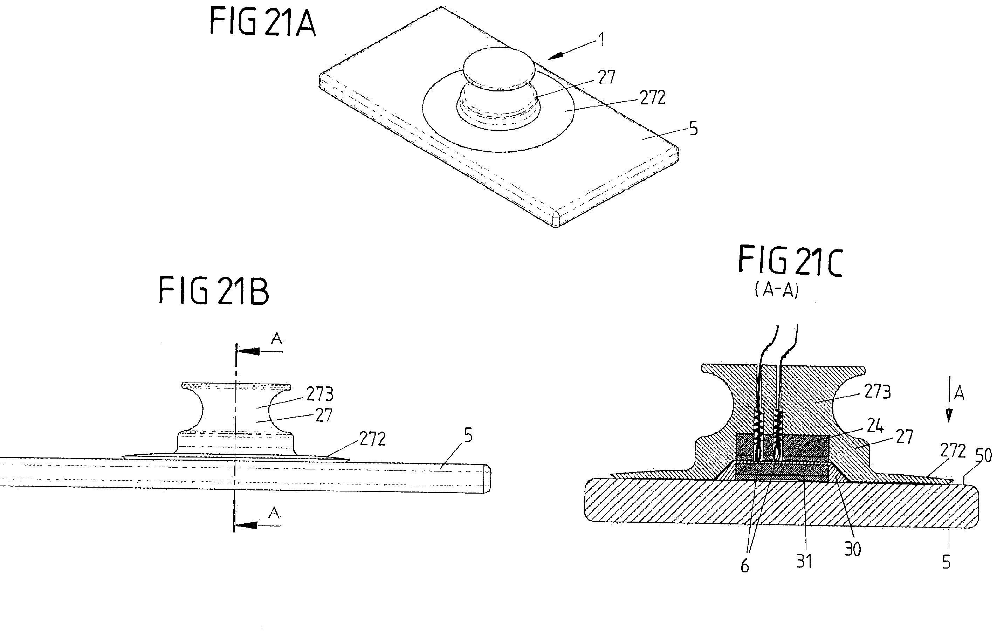

Fig. 20A-20C und 21A-21C zeigen ein erfindungsgemäßes Ausführungsbeispiel einer Verbindungsvorrichtung 1, die ein Verschlussmodul 2 mit einem Unterdruckelement 27 aufweist, das in eine Ansetzrichtung A an ein Ansetzteil 30 einer mit einer Baugruppe 5 verbundenen Ansetzbaugruppe 3 angesetzt werden kann. Mit dem Unterdruckelement 27 kann eine weitere Baugruppe verbunden sein, sodass über die Verbindungsvorrichtung 1 die Baugruppe 5, ein elektronisches Gerät in Form eines Mobiltelefons, an der weiteren Baugruppe angeordnet werden kann.

Das Unterdruckelement 27 weist einen flexiblen Randabschnitt 272 in Form eines Napfelements auf. Zudem ist an einem Körper 273 ein Magnetelement 24 angeordnet, das beim Ansetzen des Verschlussmoduls 2 an die Ansetzbaugruppe 3 mit einem Magnetelement 31 an dem Ansetzteil 30 der Ansetzbaugruppe 3 magnetisch anziehend wechselwirkt und somit das Ansetzen des Verschlussmoduls 2 an die Ansetzbaugruppe 3 magnetisch unterstützt.

In angesetzter Stellung (Fig. 21A-21C) besteht eine Unterdruckwirkung zwischen dem Unterdruckelement 27 des Verschlussmoduls 2 und einer Ansetzkomponente 50 der Baugruppe 5, an der die Ansetzbaugruppe 3 angeordnet ist, aufgrund elastischer Deformation des flexiblen Randabschnitts 272 und Schaffen eines (Beinahe-)Vakuums zwischen dem Unterdruckelement 27 und der Ansetzkomponente 50.

Das Lösen des Verschlussmoduls 2 von der Ansetzbaugruppe 3 erfolgt bei diesem Ausführungsbeispiel dadurch, dass das Verschlussmodul 2 durch Ziehen oder Kippen an dem Unterdruckelement 27 von der Ansetzbaugruppe 3 gelöst wird.

An dem Verschlussmodul 2 sind bei dem dargestellten Ausführungsbeispiel elektrische Kontaktelemente 6 angeordnet, die bei an die Ansetzbaugruppe 3 angesetztem Verschlussmodul 2 mit zugeordneten Gegenkontaktelementen 7 auf Seiten der Ansetzbaugruppe 3 elektrisch kontaktieren, wie dies aus Fig. 20C in Zusammenschau mit Fig. 21C ersichtlich ist. Über die Kontaktelemente 6 und die Gegenkontaktelemente 7 kann somit eine elektrische Verbindung zwischen der der Ansetzbaugruppe 30 zugeordneten Baugruppe 5 und einer dem Verschlussmodul 2 zugeordneten Baugruppe hergestellt werden, beispielsweise um eine elektrische Versorgung oder eine Datenverbindung bereitzustellen.

Bei dem dargestellten Ausführungsbeispiel weisen die elektrischen Kontaktelemente 6 Kontaktstifte 61 auf, die über Federelemente 62 elastisch an dem Körper 273 des Unterdruckelements 27 abgestützt und mit elektrischen Leitungen 60 verbunden sind. Die Gegenkontaktelemente 7 können demgegenüber beispielsweise als Kontaktpads oder dergleichen an einer dem Unterdruckelement 27 zugewandten Oberseite des Ansetzteils 30 ausgebildet sein, sodass in einer an die Ansetzbaugruppe 3 angesetzten Stellung des Verschlussmoduls 2 (Fig. 21A-21C) die Kontaktelemente 6 mit den Gegenkontaktelementen 7 elektrisch kontaktieren.

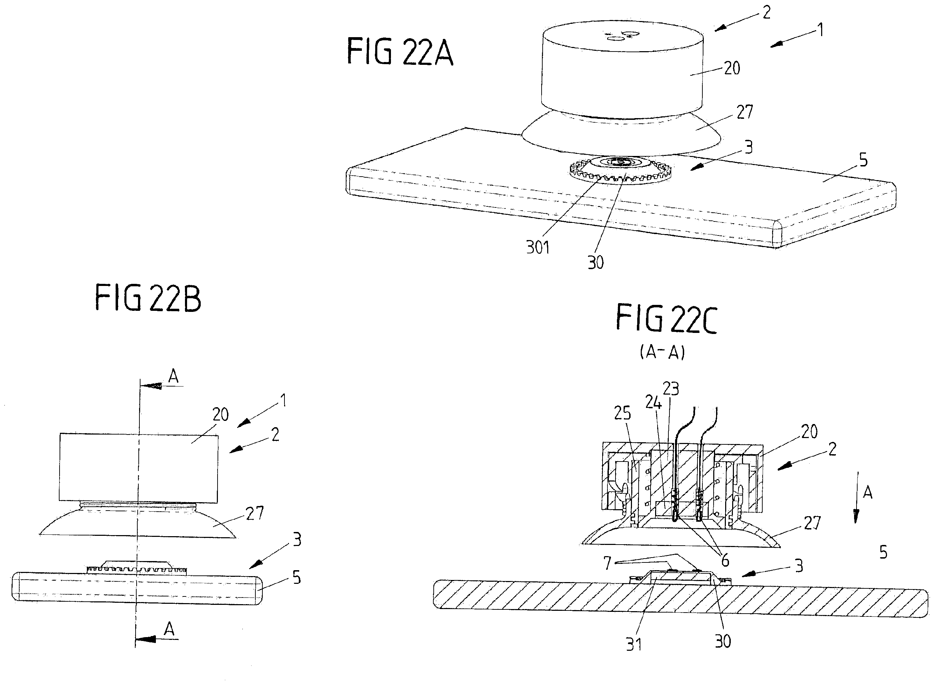

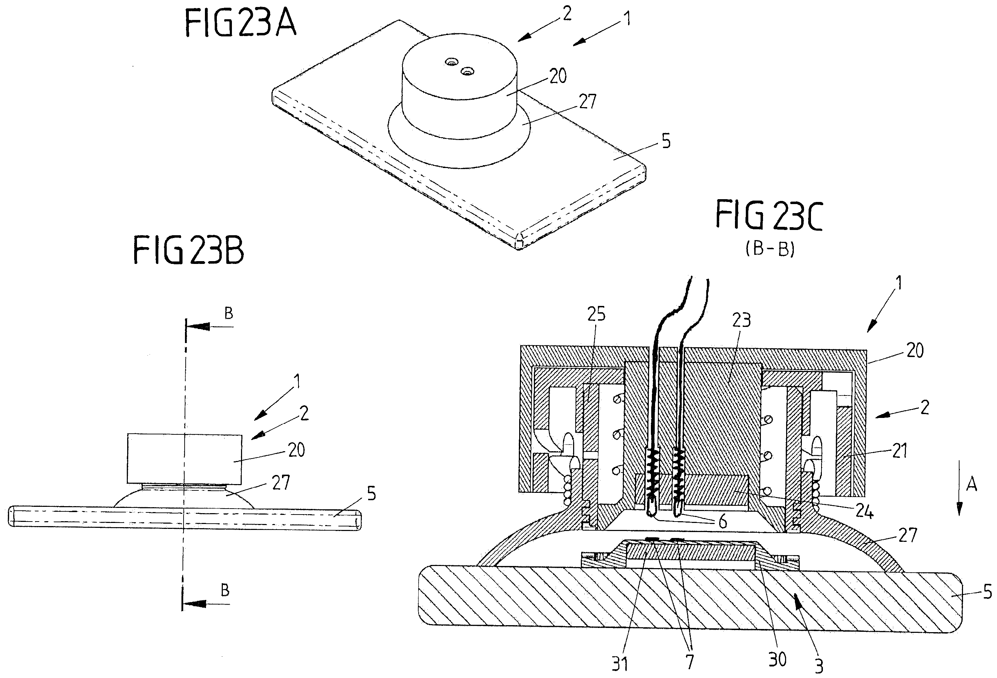

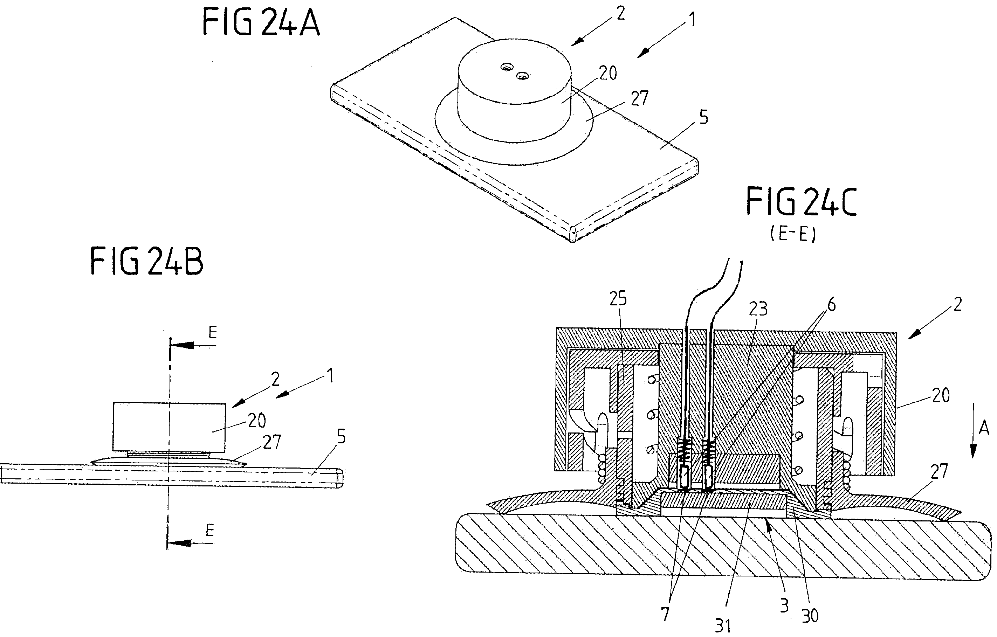

Ein in Fig. 22A-22C bis 24A-24C dargestelltes Ausführungsbeispiel ist identisch dem anhand von Fig. 1A, 1B bis 6A-6C beschriebenen Ausführungsbeispiel, wobei zusätzlich an dem Verschlussmodul 2 einerseits und an der Ansetzbaugruppe 3 andererseits elektrische Kontaktelemente 6 angeordnet sind, die bei an die Ansetzbaugruppe 3 angesetztem Verschlussmodul (Fig. 24A-24C) elektrisch miteinander kontaktieren und somit eine elektrische Verbindung zwischen der Verbindungsvorrichtung 1 zugeordneten Baugruppen herstellen können, beispielsweise für eine elektrische Versorgung einer Baugruppe 5, erfindungsgemäß eines elektronischen Geräts in Form eines Mobiltelefons, oder zum Bereitstellen einer Datenverbindung.

Ansonsten soll zum Ausführungsbeispiel gemäß Fig. 22A-22C bis 24A-24C auf das zum Ausführungsbeispiel gemäß Fig. 1A, 1B bis 6A-6C Ausgeführte verwiesen werden.

### Bezugszeichenliste

- 1: Verbindungsvorrichtung
- 2: Verschlussmodul
- 20: Gehäuseteil
- 200: Innere Mantelfläche
- 201: Befestigungsstellen
- 202: Führungselemente
- 21: Führungsteil
- 210: Mantelfläche
- 211: Führungsbahn (Kulisse)
- 212: Öffnung
- 223: Bund
- 22: Vorspannelement (Federelement)
- 23: Verstellelement
- 230: Schaft
- 231: Befestigungsstellen
- 232: Kopfabschnitt
- 233: Formschlussabschnitt (Formschlussöffnung)
- 234: Aufnahmeöffnung
- 235: Schließelement
- 236: Führungsstück
- 24: Magnetelement
- 25: Zylinderteil
- 250: Innenfläche
- 251: Strömungsöffnung
- 252: Eingriffsabschnitt (Verzahnung)
- 253: Zylindrischer Hohlraum
- 254: Dichtung
- 255: Aufnahmeöffnung
- 256: Eingriffsöffnung
- 26: Spannfeder
- 27: Unterdruckelement (Napfelement)
- 270: Bund
- 271: Öffnung
- 272: Flexibler Randabschnitt
- 273: Körper
- 274: Strömungsöffnung
- 275: Lagerelemente
- 276: Achselement
- 277: Führungseinrichtung
- 28: Betätigungselement
- 280: Federelement
- 281: Abschnitt
- 282: Kopfende
- 283: Befestigungsstellen
- 29: Deckel
- 3: Ansetzbaugruppe
- 30: Ansetzteil
- 300: Formschlussabschnitt
- 301: Eingriffsabschnitt (Verzahnung)
- 302: Aufnahmeöffnung
- 303: Gewinde
- 304: Oberfläche
- 31: Magnetelement
- 4: Baugruppe
- 5: Baugruppe
- 50: Ansetzkomponente (Ansetzfläche)
- 500: Öffnung
- 501: Gewinde
- 51: Behälterkörper
- 6, 7: Elektrisches Kontaktelement
- 60: Leitung
- 61: Kontaktstift
- 62: Federelement
- A: Ansetzrichtung
- B: Raum
- D: Drehrichtung
- F: Luftströmung
- O: Öffnungsrichtung
- R: Rotationsachse

## Patentansprüche

1. System, mit
einem Mobiltelefon und
einer Verbindungsvorrichtung (1) zum lösbaren Verbinden des Mobiltelefons mit einer weiteren Baugruppe, wobei die Verbindungsvorrichtung (1) ein Verschlussmodul (2) mit einem Unterdruckelement (27) aufweist, das in eine Ansetzrichtung (A) mit einer Ansetzkomponente (50) zum Verbinden des Mobiltelefons mit der weiteren Baugruppe verbindbar ist und in einer verbundenen Stellung derart mit der Ansetzkomponente (50) wechselwirkt, dass bei Belastung des Verschlussmoduls (2) und der Ansetzkomponente (50) entgegen der Ansetzrichtung (A) relativ zueinander das Unterdruckelement (27) und die Ansetzkomponente (50) aufgrund einer Unterdruckwirkung zwischen dem Unterdruckelement (27) und der Ansetzkomponente (50) aneinander gehalten sind, wobei das Verschlussmodul (2) ein erstes Magnetelement (24) zum magnetischen Unterstützen der Verbindung des Mobiltelefons mit der weiteren Baugruppe aufweist,
wobei das Unterdruckelement (27) durch ein zumindest abschnittsweise elastisches Napfelement ausgebildet ist und die Ansetzkomponente (50) durch eine als Ansetzfläche (50) dienende Gehäusefläche (50) des Mobiltelefons ausgebildet ist,
wobei eine Ansetzbaugruppe (3) mit einem Ansetzteil (30) und einem in einer Aufnahmeöffnung (302) des Ansetzteils (30) aufgenommenen zweiten Magnetelement (31) an der Ansetzfläche (50) angeordnet ist, um magnetisch mit dem ersten Magnetelement (24) des Verschlussmoduls (2) zusammen zu wirken.

2. System nach Anspruch 1, **dadurch gekennzeichnet, dass** das erste Magnetelement (24) an dem Unterdruckelement (27) angeordnet ist.

3. System nach einem der vorangehenden Ansprüche, **dadurch gekennzeichnet, dass** das Verschlussmodul (2) zumindest ein elektrisches Kontaktelement (6) zum elektrischen Kontaktieren mit zumindest einem der Ansetzkomponente (50) zugeordneten Gegenkontaktelement (7) in der verbundenen Stellung aufweist.

## Claims

1. A system, comprising
a mobile phone, and
a connecting device (1) for releasably connecting the mobile phone to a further assembly, wherein the connecting device (1) includes a closure module (2) with a vacuum element (27), which in an attachment direction (A) can be connected to an attachment component (50) for connecting the mobile phone to the further assembly and in a connected position interacts with the attachment component (50) in such a way that on loading of the closure module (2) and the attachment component (50) relative to each other against the attachment direction (A) the vacuum element (27) and the attachment component (50) are held at each other due to a vacuum effect between the vacuum element (27) and the attachment component (50), wherein the closure module (2) includes a first magnetic element (24) for magnetically supporting the connection of the mobile phone to the further assembly,
wherein the vacuum element (27) is formed by an at least sectionally elastic cup element and the attachment component (50) is formed by a housing surface (50) of the mobile phone serving as an attachment surface (50),
wherein an attachment assembly (3) with an attachment part (30) and a second magnetic element (31) received in a receiving opening (302) of the attachment part (30) is arranged on the attachment surface (50) in order to magnetically cooperate with the first magnetic element (24) of the closure module (2).

2. The system according to claim 1, **characterized in that** the first magnetic element (24) is arranged on the vacuum element (27).

3. The system according to any of the preceding claims, **characterized in that** the closure module (2) includes at least one electrical contact element (6) for electrically contacting with at least one counter-contact element (7) associated to the attachment component (50) in the connected position.

## Revendications

1. Système, comprenant
un téléphone portable et
un dispositif de connexion (1) pour connecter de manière amovible le téléphone portable à un autre ensemble, le dispositif de connexion (1) présentant un module de fermeture (2) avec un élément de dépression (27) qui peut être connecté dans une direction de rattachement (A) à un composant de rattachement (50) pour connecter le téléphone portable à l'autre ensemble et qui interagit dans une position connectée avec le composant de rattachement (50) de telle sorte, en ce que, lorsque le module de fermeture (2) et le composant de rattachement (50) sont chargés l'un par rapport à l'autre dans le sens opposé à la direction de rattachement (A), l'élément de dépression (27) et le composant de rattachement (50) sont maintenus l'un contre l'autre en raison d'une action de dépression entre l'élément de dépression (27) et le composant de rattachement (50), le module de fermeture (2) présentant un premier élément magnétique (24) pour soutenir magnétiquement la connexion du téléphone portable avec l'autre ensemble,
l'élément de dépression (27) étant formé par un élément de coupelle élastique au moins par sections et le composant de rattachement (50) étant formé par une surface de boîtier (50) du téléphone portable servant de surface de rattachement (50),
dans lequel un ensemble de rattachement (3) comprenant une partie de rattachement (30) et un deuxième élément magnétique (31) reçu dans une ouverture de réception (302) de la partie de rattachement (30) est agencé sur la surface de rattachement (50) pour coopérer magnétiquement avec le premier élément magnétique (24) du module de fermeture (2).

2. Système selon la revendication 1, **caractérisé en ce que** le premier élément magnétique (24) est agencé sur l'élément de dépression (27).

3. Système selon l'une quelconque des revendications précédentes, **caractérisé en ce que** le module de fermeture (2) comprend au moins un élément de contact électrique (6) destiné à entrer en contact électrique avec au moins un élément de contact complémentaire (7) associé au composant de rattachement (50) dans la position connectée.
